# FASCICULE DE BREVET EUROPEEN

(11) **EP 4 202 083 B1**
(45) Date de publication et mention de la délivrance du brevet: **15.05.2024**
(21) Numéro de dépôt: 22214505.4
(22) Date de dépôt: 19.12.2022
(51) Int. Cl.: G01N 27/38

(54) **PRÉPARATION ET ACTIVATION D'ÉLECTRODES À BASE DE CARBONE AMORPHE DLC PAR TRAITEMENT ÉLECTROCHIMIQUE**
HERSTELLUNG UND AKTIVIERUNG VON ELEKTRODEN AUF BASIS VON AMORPHEM DLC DURCH ELEKTROCHEMISCHE BEHANDLUNG
PREPARATION AND ACTIVATION OF DLC AMORPHOUS CARBON ELECTRODES BY ELECTROCHEMICAL TREATMENT

(30) Priorité: 22.12.2021 FR 2114238
(43) Date de publication de la demande: 28.06.2023
(73) Titulaire: COMMISSARIAT A L'ENERGIE ATOMIQUE ET AUX ENERGIES ALTERNATIVES, 75015 Paris (FR)
(72) Inventeur: THOMAS, Yohann, 38054 Grenoble cedex 09 (FR); ZOUAOUI, Fares, 38054 Grenoble cedex 09 (FR)
(74) Mandataire: Cabinet Nony

(56) Documents cités:
- DE-C1- 19 939 011
- US-A1- 2010 012 494
- US-A1- 2013 313 120
- NILKAR M ET AL: "Effects of nitrogen incorporation on N-doped DLC thin film electrodes fabricated by dielectric barrier discharge plasma: Structural evolution and electrochemical performances", JOURNAL OF ALLOYS AND COMPOUNDS, ELSEVIER SEQUOIA, LAUSANNE, CH, vol. 853, 22 septembre 2020 (2020-09-22), XP086326576, ISSN: 0925-8388, DOI: 10.1016/J.JALLCOM.2020.157298 [extrait le 2020-09-22]

## Description

### Domaine technique

La présente invention concerne le domaine de la fabrication de capteurs électrochimiques pour l'analyse physico-chimique d'un liquide. Plus particulièrement, elle concerne la préparation et l'activation d'électrodes de carbone amorphe DLC par traitement électrochimique.

### Technique antérieure

Les électrodes à base de diamant dopé, en particulier à base de diamant dopé au bore, noté plus couramment BDD (pour « Boron Doped Diamond » en terminologie anglo-saxonne), possèdent des caractéristiques, telles qu'une excellente inertie chimique, un faible courant de fond et une large fenêtre de potentiel, qui les rendent particulièrement adaptées à des fins de détection ou d'analyse. La préparation de ces électrodes BDD présente des contraintes de production (température de synthèse >800°C, réglages très précis) ; le coût de la synthèse (vitesse de croissance du cristal très lente) est élevé. Ces inconvénients cantonnent donc l'utilisation des BDD à des marchés de niche.

Des électrodes en carbone amorphe DLC (pour l'acronyme anglo-saxon « Diamond Like Carbon ») ont été étudiées dans le but de remplacer les électrodes BDD. Le DLC, comme décrit dans la publication [1], se caractérise comme une forme métastable de carbone amorphe composé de liaisons atomiques C-sp2 et C-sp3, avec une proportion de liaisons sp3 significative. Les électrodes à base de DLC possèdent de nombreuses propriétés similaires au BDD, parmi lesquelles une dureté élevée, une excellente résistance à l'usure, une inertie chimique, une régénération de l'interface de mesure, un faible courant résiduel, une large fenêtre de potentiel, des propriétés d'anticorrosion et de biocompatibilité.

Par ailleurs, de manière avantageuse, à la différence du BDD, la réalisation des couches ou films de DLC par dépôt chimique en phase vapeur (VPD pour « Vapor Phase Déposition ») s'avère particulièrement avantageuse et aisée à mettre en oeuvre. En particulier, les couches de DLC peuvent être réalisées à température ambiante, typiquement par pulvérisation cathodique magnétron et en l'absence de pré-traitement de surface. Les couches de DLC ainsi obtenues présentent de bonnes propriétés de lissage de surface au niveau atomique. Ainsi, les films de DLC peuvent être facilement préparés sur divers substrats, sur des grandes surfaces et en grande série. Ces mérites font du DLC un matériau particulièrement avantageux, comparativement au BDD, pour réduire le coût de fabrication des électrodes. Par exemple, les films de DLC peuvent être micro-fabriqués à l'aide de la technologie conventionnelle de préparation des semi-conducteurs et facilement intégrés dans des canaux micro-fluidiques pour fabriquer des micro-biocapteurs.

Malheureusement, le DLC présente une réactivité électrochimique faible en comparaison avec le BDD, ce qui ne permet pas d'exploiter les films de DLC pour le développement d'électrodes à base de DLC adaptées à des fins de détection et d'analyse.

Par conséquent, il demeure un besoin de pouvoir augmenter la réactivité électrochimique de surface des films de DLC pour permettre leur utilisation comme électrodes dans des capteurs électrochimiques. On parle alors d'un traitement d'activation de surface.

Des traitements d'activation de surface ont déjà été proposés en vue d'améliorer les propriétés électrochimiques d'électrodes de type BDD.

Par exemple, un pré-traitement électrochimique de microélectrodes BDD a été étudié par Duran *et al.* [2], dans le but de comprendre comment une polarisation anodique, cathodique ou combinée affecte la cinétique de transfert de charge des électrodes. Les résultats montrent que les meilleures performances sont obtenues en appliquant une polarisation combinée anodique et cathodique. Les pré-traitements ont été réalisés dans 0,5 M H₂SO₄. Le prétraitement anodique a été réalisée pendant 30 secondes à 250 mA.cm⁻² ; et le prétraitement cathodique a été réalisé pendant 180 secondes à 250 mA.cm⁻².

Également, Salazar-Banda *et al.* [3] ont soumis des électrodes BDD à un prétraitement anodique en appliquant une tension de 3 V *vs* ESH (Electrode Standard à Hydrogène) pendant 30 minutes, ou encore un traitement cathodique de - 3 V *vs* ESH entre 3 et 30 minutes dans 0,5 M H₂SO₄. Le prétraitement anodique donne des surfaces d'électrodes qui ne favorisent pas la cinétique électrochimique. En revanche, le prétraitement cathodique améliore la réactivité électrochimique (rendement maximal après 30 minutes) du BDD et assure des résultats fiables et reproductibles. Malheureusement, ce traitement présente l'inconvénient de réduire la fenêtre électrochimique.

On peut encore citer le document WO 2012/110600 qui propose un procédé d'activation électrochimique d'une électrode à base de diamant dopé, en particulier à base de BDD, permettant d'accéder à une électrode ayant une cinétique de transfert de charge satisfaisante et des propriétés électrochimiques stables et reproductibles. Le procédé d'activation consiste à appliquer des impulsions de courant ou de potentiel. Les valeurs seuils absolues des impulsions d'activation dans un électrolyte ne contenant pas d'espèces électro-actives sont de -1 µA.cm⁻² et 3 mA.cm⁻² en courant ou -200 mV et 2 V en potentiel ; tandis que, dans un électrolyte contenant des espèces électro-actives, les valeurs sont de - 400 µA.cm⁻² en courant ou - 2 V en potentiel. Il est préconisé une alternance d'impulsions anodiques et d'impulsions cathodiques. Il est également noté qu'il n'est pas possible de faire l'activation dans un milieu comprenant des espèces électro-actives, en appliquant des impulsions de courant ou de potentiel anodique.

Ces méthodes, adaptées pour accroître la réactivité de surface des électrodes à base de diamant dopé, s'avèrent toutefois inadéquates pour des électrodes à base de carbone amorphe DLC. Les traitements précités ont ainsi peu d'effet, voire aucun effet, sur les caractéristiques électrochimiques d'électrodes DLC. Qui plus est, ces traitements conduisent à des effets en termes d'amélioration des propriétés électrochimiques qui ne sont pas reproductibles, et à des électrodes DLC instables dans le temps.

Il demeure ainsi un besoin de disposer d'un moyen d'activation de la surface d'électrodes à base de carbone amorphe DLC, permettant d' améliorer la cinétique de transfert de charge et d'augmenter la surface active de ces électrodes, ainsi que d'accéder à des propriétés électrochimiques stables et homogènes.

### Résumé de l'invention

La présente invention vise précisément à proposer un traitement d'activation de la surface d'électrodes à base de carbone amorphe DLC, permettant d'accroître, d'homogénéiser et de stabiliser les propriétés électrochimiques des électrodes, en particulier leur réactivité électrochimique et leur surface électrochimiquement active.

Plus particulièrement, l'invention concerne, selon la revendication indépendante 1, un procédé d'activation de la surface d'une électrode à base de carbone amorphe DLC par un traitement électrochimique comportant au moins les étapes (i) et (ii) suivantes, opérées dans cet ordre :
(i) application à ladite électrode d'une excitation électrique sous la forme d'une alternance d'impulsions électriques cathodiques et anodiques, en courant ou en tension, au contact d'un électrolyte aqueux comprenant au moins une espèce oxydante d'un couple oxydo-réducteur présentant un potentiel standard, à température ambiante et pression atmosphérique, noté E⁰, strictement supérieur à 0, et au moins un sel de fond ; et
(ii) application à ladite électrode, ayant été préalablement soumise à l'étape (i), d'une excitation électrique sous la forme d'une alternance d'impulsions électriques cathodiques et anodiques, en tension, au contact d'un électrolyte aqueux dépourvu d'espèce électro-active.

Comme illustré dans les exemples qui suivent, les inventeurs ont constaté qu'il est possible d'activer la surface d'une électrode à base de carbone amorphe DLC, dite plus simplement dans la suite du texte « électrode DLC », en mettant en oeuvre, dans cet ordre, les deux étapes (i) et (ii) de traitement électrochimique de surface dans les conditions spécifiques précitées, en particulier opérant dans deux électrolytes différents.

De manière avantageuse, le procédé d'activation de surface selon l'invention, suivant les deux étapes de traitement électrochimique précitées, permet d'accéder à une électrode DLC présentant une excellente réactivité électrochimique.

La réactivité électrochimique d'une électrode peut être évaluée par voltammétrie cyclique (CV), en présence d'un couple redox réversible, par exemple en présence d'un mélange équimolaire de ferricyanure de potassium et de ferrocyanure de potassium, en particulier dans les conditions décrites dans les exemples qui suivent. La réactivité électrochimique est considérée comme étant d'autant meilleure que la différence entre le potentiel du pic anodique (noté Eₐ) et celui du pic cathodique (noté E_{c}), noté (ΔEₚ), est faible.

Le procédé d'activation selon l'invention permet avantageusement d'accroître de manière significative la réactivité électrochimique de l'électrode, autrement dit d'abaisser de manière significative la valeur de ΔEₚ de l'électrode, avantageusement d'au moins 50 % de sa valeur initiale avant traitement, en particulier d'au moins 60 %, notamment d'au moins 70 %, voire d'au moins 80 %, de sa valeur initiale avant traitement.

Également, de manière avantageuse, le procédé d'activation de surface selon l'invention permet d'accroître le nombre de site actifs, autrement dit d'accroître la surface électrochimiquement active de l'électrode DLC.

L'augmentation de la surface électrochimiquement active d'une électrode peut être appréciée par l'augmentation de l'intensité du courant anodique (noté iₐ) et/ou cathodique (noté i_{c}) lors d'un essai de voltammétrie cyclique, tel que décrit précédemment pour l'appréciation de la réactivité électrochimique de surface.

Le double traitement électrochimique suivant le procédé d'activation selon l'invention permet ainsi d'améliorer de manière significative les propriétés électrochimiques d'une électrode DLC, en particulier d'améliorer la réactivité électrochimique et la surface active de l'électrode DLC.

Qui plus est, comme illustré dans les exemples qui suivent, le procédé d'activation électrochimique selon l'invention permet, non seulement d'améliorer les performances électrochimiques, mais également d'homogénéiser ces performances. En particulier, de manière avantageuse, quelles que soient les valeurs de réactivité électrochimique et de surface active des électrodes avant traitement, le traitement d'activation selon l'invention permet de conduire à des électrodes présentant des propriétés électrochimiques, en particulier une réactivité électrochimique et une surface active, améliorées et similaires.

Également, le procédé d'activation électrochimique selon l'invention permet d'accéder à des propriétés électrochimiques stables et reproductibles.

En particulier, de manière avantageuse, les électrodes DLC activées selon le procédé de l'invention présentent une bonne stabilité à l'oxydation, par exemple lorsqu'elles sont exposées à l'air libre pendant plusieurs jours.

L'invention concerne encore, selon la revendication indépendante 13, une électrode à base de carbone amorphe DLC, dont la surface est activée électro-chimiquement par un procédé selon l'invention, tel que défini précédemment.

De manière avantageuse, le procédé d'activation électrochimique selon l'invention peut être mis en oeuvre pour traiter des électrodes DLC de grande surface.

Ainsi, selon une variante de réalisation particulièrement avantageuse, le procédé d'activation électrochimique selon l'invention peut être appliqué à un wafer entier, en particulier de silicium, métallique ou de nature polymérique, revêtu d'une couche de DLC, et destiné à former, après découpe, des électrodes individuelles de dimensions adaptées à leur application. Une telle variante de mise en oeuvre est particulièrement avantageuse en termes de coût de production et de reproductibilité des propriétés électrochimiques d'une électrode individuelle à l'autre.

Alternativement, le procédé d'activation électrochimique selon l'invention peut être appliqué à une électrode, dite électrode individuelle, présentant déjà les dimensions adaptées à son application, ladite électrode individuelle pouvant par exemple être préalablement obtenue à l'issue de la découpe d'un wafer de grandes dimensions, par exemple d'un wafer en silicium, revêtu d'une couche de DLC.

Les électrodes à base de DLC activées obtenues à l'issue du procédé de l'invention, présentant d'excellentes propriétés électrochimiques, en particulier en termes de réactivé électrochimique et de surface active élevées, et de stabilité, peuvent être avantageusement utilisées pour la fabrication de capteurs électrochimiques, en particulier destinés à l'analyse physico-chimique de liquides de diverses natures. Elles peuvent encore être mises en oeuvre comme électrodes dans des détecteurs utilisés en biotechnologie, par exemple pour le suivi de procédés de bio-production.

L'invention concerne ainsi, selon la revendication indépendante 14, l'utilisation d'une électrode à base de carbone amorphe DLC selon l'invention, dont la surface est activée électro-chimiquement par un procédé selon l'invention, dans un capteur électrochimique, en particulier destiné à l'analyse physico-chimique d'un liquide, par exemple pour le suivi de la qualité de l'eau, ou dans un détecteur en biotechnologie.

L'invention concerne encore un capteur électrochimique, en particulier destiné à l'analyse physico-chimique d'un liquide, par exemple pour le suivi de la qualité de l'eau, comprenant une électrode à base de carbone amorphe DLC dont la surface est activée électro-chimiquement par un procédé selon l'invention.

D'autres caractéristiques, variantes et avantages du procédé d'activation de surface selon l'invention, et des électrodes à base de carbone amorphe DLC activées ainsi obtenues, ressortiront mieux à la lecture de la description, des exemples et figures qui vont suivre, donnés à titre illustratif et non limitatif de l'invention.

Dans la suite du texte, les expressions « compris entre ... et ... », « allant de ... à ... » et « variant de ... à ... » sont équivalentes et entendent signifier que les bornes sont incluses, sauf mention contraire.

### Brève description des dessins

[Fig 1] présente les voltamogrammes réalisés pour une électrode DLC avant activation, après la première étape du traitement d'activation et après la deuxième étape du traitement d'activation selon l'invention, dans les conditions décrites en exemple 1.1.;
[Fig 2] présente les résultats, suivant l'exemple 1.2., de la réactivité électrochimique d'une électrode DLC (ΔEₚ) obtenue à l'issue de la première étape du traitement d'activation (figure 2(a)), pour différentes durées d'excitation (de 0 à 90 minutes), et à l'issue de la deuxième étape du traitement d'activation (figure 2(b)), pour différentes durées d'excitation (de 0 à 50 minutes) ;
[Fig 3] présente les résultats de la réactivité électrochimique d'une électrode DLC (ΔEₚ) à l'issue de la première étape du traitement d'activation dans les conditions décrites dans l'exemple 2, pour différentes durées d'excitation (de 0 à 80 minutes) ;
[Fig 4] présente les résultats, suivant l'exemple 3, de la réactivité électrochimique d'une électrode DLC (ΔEₚ) à l'issue de la première étape du traitement d'activation pour différentes durées d'excitation électrique (de 0 à 40 minutes) ;
[Fig 5] présente l'évolution de ΔEₚ à l'issue de la première étape du traitement d'activation, opérée avec des pulses en potentiel (exemple 1) ou des pulses en courant, en fonction de la durée d'excitation, dans les conditions décrites en exemple 4 ;
[Fig 6] présente les voltamogrammes, réalisés dans les conditions décrites en exemple 5, pour une électrode DLC avant activation, à l'issue de la première étape du traitement électrochimique réalisée suivant les conditions de l'exemple 4, et à l'issue d'une deuxième étape de traitement électrochimique réalisée avec des pulses en courant ;
[Fig 7] présente les voltamogrammes réalisés pour une électrode DLC, dans les conditions de l'exemple 6, avant activation, après 10 minutes et 20 minutes d'une étape de traitement électrochimique par excitation avec des pulses uniquement cathodiques ;
[Fig 8] présente les voltamogrammes réalisés pour une électrode DLC, dans les conditions de l'exemple 7, avant activation, après 10 minutes et 20 minutes d'une étape de traitement électrochimique par excitation avec des pulses uniquement anodiques ;
[Fig 9] présente les résultats de la réactivité électrochimique d'une électrode DLC (ΔEₚ) à l'issue du traitement électrochimique opéré dans les conditions décrites en exemple 8, dans un électrolyte dépourvu d'espèce oxydante pour différentes durées d'excitation électrique ;
[Fig 10] présente les voltamogrammes réalisés pour une électrode DLC suivant les conditions de l'exemple 9, avant traitement et après 10 minutes et 20 minutes d'un traitement électrochimique dans un électrolyte comprenant du sel de Mohr ;
[Fig 11] présente les voltamogrammes réalisés pour une électrode DLC suivant les conditions de l'exemple 10, avant traitement et après 10 minutes et 20 minutes d'un traitement électrochimique dans un électrolyte comprenant du cobaltocène ;
[Fig 12] présente les voltamogrammes réalisés pour une électrode DLC suivant les conditions de l'exemple 11, avant traitement et après 10 minutes, 20 et 30 minutes d'un traitement électrochimique dans un électrolyte comprenant du cyanure de sodium ;
[Fig 13] présente les voltamogrammes réalisés pour une électrode DLC suivant les conditions de l'exemple 12, avant traitement et après 10 minutes et 20 minutes d'un traitement électrochimique dans un électrolyte comprenant du ferrocène méthanol ;
[Fig 14] présente les voltamogrammes réalisés pour une électrode DLC suivant les conditions de l'exemple 13, avant traitement et après 10 minutes, 20 minutes et 30 minutes d'un traitement électrochimique dans un électrolyte comprenant 1 mM (figure 14 (a)) et 2 mM de ferrocyanure de sodium (figure 14(b)) ;
[Fig 15] présente les voltamogrammes réalisés pour une électrode DLC suivant les conditions de l'exemple 14, avant traitement et après 10 minutes, 20 minutes et 30 minutes d'un traitement électrochimique dans un électrolyte comprenant 1 mM de ferrocyanure de potassium ;
[Fig 16] présente les voltamogrammes réalisés pour une électrode DLC avant activation, après la première étape du traitement d'activation et après la deuxième étape du traitement d'activation selon l'invention, dans les conditions décrites en exemple 15 ;
[Fig 17] présente les résultats, suivant l'exemple 15, de la réactivité électrochimique d'une électrode DLC (ΔEₚ) obtenue à l'issue de la première étape du traitement d'activation (figure 17(a)), pour différentes durées d'excitation (de 0 à 80 minutes), et à l'issue de la deuxième étape du traitement d'activation (figure 17(b)), pour différentes durées d'excitation (de 0 à 30 minutes) ;
[Fig 18] présente les voltamogrammes réalisés pour une électrode DLC suivant les conditions de l'exemple 16, avant traitement, après 10 minutes, 20 minutes et 30 minutes de la deuxième étape du traitement d'activation, sans première étape préalable ;
[Fig 19] présente les résultats, suivant l'exemple 17, de la réactivité électrochimique d'une électrode DLC (ΔEₚ) à l'issue de la première étape du traitement d'activation pour différentes durées d'excitation électrique (de 0 à 60 minutes) ;
[Fig 20] présente les voltamogrammes réalisés pour une électrode DLC avant activation, après la première étape du traitement d'activation et après la deuxième étape du traitement d'activation selon l'invention, dans les conditions décrites en exemple 17 ;
[Fig 21] présente les résultats, suivant l'exemple 18, de la réactivité électrochimique d'une électrode DLC (ΔEₚ) à l'issue de la première étape du traitement d'activation pour différentes durées d'excitation électrique (de 0 à 60 minutes) ;
[Fig 22] présente les voltamogrammes réalisés pour une électrode DLC avant activation, après la première étape du traitement d'activation et après la deuxième étape du traitement d'activation selon l'invention, dans les conditions décrites en exemple 19 ;
[Fig 23] présente les voltamogrammes réalisés pour une électrode DLC avant activation, après la première étape du traitement d'activation et après la deuxième étape du traitement d'activation selon l'invention, dans les conditions décrites en exemple 20.

### Description détaillée

### ELECTRODE A BASE DE CARBONE AMORPHE DLC

Comme indiqué précédemment, le procédé de l'invention vise à activer la surface d'une électrode à base de carbone amorphe dit « DLC » (pour l'acronyme anglo-saxon « Diamond Like Carbon »).

Par « électrode à base de DLC », on entend, dans le cadre de l'invention, toute électrode dont le ou un des constituants est du DLC. Une électrode à base de DLC peut ainsi être une électrode uniquement constituée de DLC ou encore une électrode dans laquelle le DLC ne représente qu'une partie de l'électrode.

En particulier, une électrode à base de DLC peut comprendre, voire être formée d'une couche (ou film) de DLC supportée par un substrat, en particulier en matériau(x) métallique(s), métalloïde(s) ou polymérique(s), par exemple en silicium.

Le substrat, en particulier en silicium, peut présenter une épaisseur comprise entre 0,1 et 2 mm, en particulier entre 0,5 et 1 mm et plus particulièrement entre 0,7 et 0,9 mm.

La couche de DLC présente de préférence une épaisseur comprise entre 10 nm et 10 µm, en particulier entre 20 nm et 500 nm et plus particulièrement entre 25 nm et 250 nm.

Comme évoqué précédemment, le DLC est bien connu ; il est par exemple décrit dans la publication [1]. Le DLC se caractérise comme une forme métastable de carbone amorphe avec une proportion de liaisons sp3 significative.

L'électrode DLC peut être préalablement préparée par toute technique connue de l'homme du métier.

De préférence, la préparation d'une électrode DLC met en oeuvre au moins une étape de dépôt d'une couche de DLC en surface dudit substrat, en particulier en silicium.

Ledit substrat, notamment en silicium, destiné à supporter la couche de DLC, peut être soumis, préalablement au dépôt de ladite couche de DLC, à un traitement de surface de désoxydation chimique, de préférence au niveau de ses deux faces, ce qui permet avantageusement d'accroître la conductivité électrique transversale.

Ladite électrode à base de carbone amorphe DLC peut être préparée par dépôt de DLC, en surface du substrat, par tout technique connue de l'homme du métier, par exemple par dépôt par pulvérisation cathodique magnétron.

Il appartient à l'homme du métier d'ajuster les conditions du dépôt de DLC par pulvérisation cathodique magnétron pour obtenir la couche de DLC souhaitée.

De manière avantageuse, la couche de DLC peut être réalisée à température ambiante (25 ± 5°C).

De manière avantageuse, l'électrode à base de DLC n'est soumise à aucun pré-traitement de surface ou de polissage de la couche de DLC, préalablement à son activation par le procédé de l'invention.

Comme évoqué précédemment, la couche de DLC peut être aisément formée sur une surface de grandes dimensions.

Ainsi, selon une première variante de réalisation, l'électrode à base de DLC mise en oeuvre dans un procédé d'activation de surface selon l'invention peut être un substrat, encore appelé wafer, revêtu sur au moins l'une de ses faces, d'une couche de DLC, et destiné à former, après découpe, des électrodes individuelles, de dimensions adaptées à l'usage souhaité.

Ledit wafer peut typiquement présenter des formes variées (circulaire, carré, rectangle) avec des surfaces comprises entre 0,1 et 2000 cm², en particulier entre 1 et 400 cm².

Le procédé de traitement électrochimique selon l'invention peut encore être mis en oeuvre pour activer la surface d'une électrode individuelle à base de DLC, ayant déjà les dimensions souhaitées pour l'usage auquel elle est destinée.

L'électrode individuelle à base de DLC peut par exemple avoir été préalablement obtenue par découpe d'un wafer de silicium revêtu d'une couche de DLC, par exemple tel que décrit précédemment.

L'électrode à base de DLC peut par exemple présenter des surfaces comprises entre 0,1 et 100 mm², en particulier entre 1 et 50 mm².

### TRAITEMENT D'ACTIVATION ELECTROCHIMIQUE

Comme indiqué précédemment, le traitement d'activation de surface selon l'invention procède en deux étapes, réalisées dans cet ordre et dans les conditions spécifiques indiquées ci-dessus et détaillées dans la suite du texte, d'excitation électrique sous la forme d'impulsions alternées.

Sauf indication contraire, les caractéristiques décrites ci-dessous, relativement à une excitation sous la forme d'impulsions électriques alternées, s'appliquent à la première étape, notée étape (i), et/ou à la deuxième étape, notée étape (ii), du traitement électrochimique d'activation selon l'invention.

Une impulsion désigne une variation de courte durée d'une grandeur physique (tension, courant, etc.) avec retour à l'état initial.

Dans le cadre de l'invention, on entend par « impulsion électrique », dite encore plus simplement « pulse », une variation de courte durée de tension (potentiel) ou de courant, suivie d'un retour à l'état initial (généralement, à une amplitude égale à zéro) de la valeur de la tension ou du courant.

La durée des impulsions électriques de l'étape (i) et/ou de l'étape (ii) d'excitation d'électrique selon l'invention, notée tᵢ, peut être plus particulièrement comprise entre 5 ms et 500 ms, en particulier entre 10 ms et 250 ms et plus particulièrement entre 20 ms et 250 ms, de préférence de 100 ms.

Dans le cadre de l'invention, on entend par « amplitude », la valeur maximale de la tension (respectivement du courant) anodique ou cathodique atteinte pendant une impulsion de tension (respectivement de courant) anodique ou cathodique par rapport à une ligne de base, généralement égale à zéro.

D'une manière générale, l'amplitude, en valeur absolue, d'une impulsion électrique en tension opérée suivant l'étape (i) et/ou l'étape (ii) du procédé d'activation selon l'invention peut être supérieure ou égale à 0,5 V, en particulier comprise entre 0,5 et 1,5 V et plus particulièrement entre 0,8 et 1,3 V.

D'une manière générale, l'amplitude, en valeur absolue, d'une impulsion électrique en courant opérée suivant l'étape (i) du procédé d'activation selon l'invention peut être supérieure ou égale à 0,1 µA.cm⁻², en particulier comprise entre 0,1 et 100 µA.cm⁻² et plus particulièrement entre 0,5 et 25 µA.cm⁻².

Comme indiqué précédemment, chacune des deux étapes du traitement électrochimique d'activation selon l'invention est opérée sous la forme d'impulsions électriques alternées.

Par « impulsions électriques alternées », on entend signifier que l'excitation électrique est opérée par l'alternance d'une ou plusieurs impulsions cathodiques et d'une ou plusieurs impulsions anodiques, autrement dit suivant un enchaînement pulse(s) cathodique(s) - pulse(s) anodique(s), etc.

Le nombre de pulse(s) cathodique(s) (respectivement anodique(s)), réalisées successivement, peut être identique ou différent d'un enchaînement à un autre. Il peut être plus particulièrement compris entre 1 et 30 impulsions, de préférence entre 1 et 20 impulsions, en particulier entre 1 et 10 impulsions, notamment entre 1 et 5 impulsions et de préférence entre 1 et 3 impulsions.

Une impulsion anodique (dite encore, impulsion positive) peut être considérée comme étant une onde d'amplitude positive, dont l'amplitude augmente par rapport à la ligne de base et, après une durée tᵢ, revient à la ligne de base. Une impulsion cathodique (dite encore, impulsion négative) peut être considérée comme étant une onde d'amplitude négative, autrement dit une onde dont l'amplitude diminue par rapport à la ligne de base et revient à la ligne de base après une durée tᵢ.

De préférence, l'excitation électrique suivant l'étape (i) et/ou l'étape (ii) du procédé d'activation selon l'invention est opérée sous la forme d'impulsions périodiques. Autrement dit, l'excitation suivant l'étape (i) et/ou l'étape (ii) est formée par la répétition d'un enchaînement formé d'un nombre fixé, noté n_{c}, d'impulsion(s) cathodique(s) et d'un nombre fixé, noté nₐ, d'impulsion(s) anodique(s).

Comme indiqué précédemment, le nombre n_{c} d'impulsions cathodiques peut varier entre 1 et 30 impulsions, de préférence entre 1 et 20 impulsions, en particulier entre 1 et 10 impulsions, notamment entre 1 et 5 impulsions et de préférence entre 1 et 3 impulsions. Le nombre nₐ d'impulsions anodiques peut varier entre 1 et 30 impulsions, de préférence entre 1 et 20 impulsions, en particulier entre 1 et 10 impulsions, notamment entre 1 et 5 impulsions et de préférence entre 1 et 3 impulsions.

De préférence, l'excitation électrique suivant l'étape (i) et/ou l'étape (ii) est opérée sous la forme d'une alternance d'une unique impulsion cathodique et d'une unique impulsion anodique (autrement dit, n_{c} = 1 et nₐ = 1).

Une impulsion électrique peut avoir toute forme possible, par exemple carrée, triangulaire, sinusoïdale, en dents de scie, en escalier, etc. ou un mélange de ces formes. De préférence, les impulsions réalisées pour l'excitation électrique ont la même forme, en particulier une forme en créneaux.

Les impulsions cathodiques (respectivement anodiques) d'une même étape d'excitation électrique selon le procédé d'activation de l'invention peuvent être identiques ou non. En particulier, une impulsion cathodique (respectivement anodique) peut varier d'une autre impulsion cathodique (respectivement anodique) au regard de sa durée, de son amplitude et/ou de sa forme.

En particulier, l'amplitude, en valeur absolue, des impulsions peut varier d'une impulsion cathodique à une autre, d'une impulsion anodique à une autre, et/ou entre une impulsion cathodique et une impulsion anodique.

De préférence, l'ensemble des impulsions cathodiques (respectivement anodiques), opérées pour réaliser une étape d'excitation électrique selon le procédé d'activation de l'invention, sont identiques, autrement dit ont la même durée, la même amplitude et la même forme.

Encore plus préférentiellement, l'ensemble des impulsions cathodiques et anodiques pour réaliser une même étape d'excitation électrique suivant le procédé d'activation selon l'invention sont identiques, autrement dit ont la même durée, la même amplitude en valeur absolue et la même forme.

### (i) Première étape d'activation

Comme indiqué précédemment, la première étape du traitement d'activation électrochimique selon l'invention est réalisée dans un électrolyte aqueux comprenant au moins une espèce oxydante spécifique et au moins un sel de fond.

De préférence, le milieu aqueux de l'électrolyte au contact duquel est opérée la première étape du traitement d'activation est formé par de l'eau.

De manière préférentielle, l'électrolyte pour la première étape du traitement d'activation comprend, voire est formé, d'une ou plusieurs espèces oxydantes et d'un ou plusieurs sels de fond, dans de l'eau.

Comme évoqué précédemment, ladite espèce oxydante de l'électrolyte pour la mise en oeuvre de la première étape d'activation selon l'invention appartient à un couple oxydo-réducteur (dit encore couple rédox) présentant un potentiel standard, à température ambiante (25°C) et pression atmosphérique, noté E⁰, strictement supérieur à 0.

De préférence, l'espèce oxydante de l'électrolyte au contact duquel est réalisée la première étape d'activation selon l'invention appartient à un couple rédox présentant un potentiel standard E⁰ supérieur ou égal à 0,05 V, notamment supérieur ou égal à 0,08 V, en particulier supérieur ou égal à 0,1 V et plus particulièrement supérieur ou égal à 0,2 V.

Par exemple, ladite espèce oxydante appartient à un couple rédox présentant un potentiel standard E⁰ compris entre 0,05 V et 3 V, en particulier entre 0,1 V et 2,5 V, notamment entre 0,2 V et 2 V.

Les potentiels standards E⁰ des couples rédox sont généralement répertoriés dans la littérature, par exemple dans le Handbook (RC Handbook of Chemistry and Physics, David R. Lide, 88th édition (2007-2008*).*)

De manière avantageuse, ladite ou lesdites espèces oxydantes mise(s) en oeuvre au niveau de l'électrolyte pour la première étape d'activation selon l'invention est (sont) soluble(s) dans le milieu aqueux de l'électrolyte, en particulier dans l'eau.

L'espèce oxydante peut être organique ou inorganique.

En particulier, l'espèce oxydante peut être métallique, par exemple à base de fer (III) (fer à l'état d'oxydation +3), ou non métallique.

Plus particulièrement, l'espèce oxydante à base de fer (III) peut être choisie parmi du ferricyanure (encore appelé hexacyanoferrate (III), de formule Fe(CN)₆³⁻) ou l'ion fer (III). L'espèce oxydante à base de fer (III) peut être par exemple mise en oeuvre au niveau de l'électrolyte sous la forme :
- d'un sel de ferricyanure, en particulier de type ferricyanure de métal alcalin ou alcalino-terreux, notamment un ferricyanure de métal alcalin, tels que le ferricyanure de potassium, le ferricyanure de sodium, le ferricyanure de lithium, ou un de leurs mélanges ; ou encore
- d'un sel d'ion fer (III), par exemple de chlorure de fer (III) (encore appelé chlorure ferrique, de formule FeCl₃).

Le sel de ferricyanure, par exemple le ferricyanure de potassium, peut être mise en oeuvre au niveau de l'électrolyte, seul ou sous la forme d'un mélange de ferrocyanure et ferricyanure (Fe(CN)₆³⁻/Fe(CN)₆⁴⁻), par exemple d'un mélange de ferrocyanure de potassium et de ferricyanure de potassium.

Comme illustré dans les exemples qui suivent, l'espèce oxydante peut être sous forme complexée ou non, sous forme ionique ou encore sous forme d'oxoanion.

A titre d'exemple d'espèce oxydante sous forme complexée, on peut citer le ferricyanure (Fe(CN)₆³⁻), par exemple mis en oeuvre sous la forme d'un sel de ferricyanure comme décrit précédemment, par exemple le ferricyanure de potassium.

A titre d'exemple d'espèce oxydante sous forme ionique, on peut citer les sels de fer (III), par exemple le chlorure de fer (III).

Par oxoanion, on entend désigner un anion contenant un oxyde, de formule QOₓⁿ⁻ avec Q représentant un métal ou non-métal, par exemple l'iode ou le manganèse ; n étant un nombre entier supérieur ou égal à 1 et x étant égal à (n+w)/2 avec w la valence du métal ou non métal considéré.

A titre d'exemples d'espèce oxydante sous forme d'oxoanion, on peut citer le periodate (IO₄⁻), le permanganate (MnO₄⁻).

Les oxoanions sont plus particulièrement mis en oeuvre au niveau de l'électrolyte sous la forme de sels, notamment choisis parmi les sels de métal alcalin ou alcalino-terreux, en particulier de métal alcalin, tels que des sels de potassium, de sodium. A titre d'exemple, on peut citer le periodate de sodium, le permanganate de potassium.

Selon un mode de réalisation particulier, l'électrolyte pour la première étape du traitement d'activation selon l'invention met en oeuvre au moins une espèce oxydante choisie parmi :
- le ferricyanure (Fe(CN)₆³⁻), appartenant au couple rédox Fe(CN)₆^{3-/}Fe(CN)₆⁴⁻ ; en particulier introduit au niveau de l'électrolyte sous la forme d'un sel de ferricyanure, notamment un ferricyanure de métal alcalin ou alcalino-terreux, par exemple le ferricyanure de potassium ;
- l'ion fer (III), appartenant au couple rédox Fe³⁺/Fe²⁺ ; en particulier introduit au niveau de l'électrolyte sous la forme de chlorure de fer (III) ;
- le periodate (IO₄⁻), appartenant au couple rédox IO₄⁻/IO₃⁻, en particulier introduit au niveau de l'électrolyte sous la forme d'un sel de métal alcalin ou alcalino-terreux, par exemple le periodate de sodium ;
- le permanganate (MnO₄⁻), appartenant au couple rédox (MnO₄⁻/MnO₄²⁻), en particulier introduit au niveau de l'électrolyte sous la forme d'un sel de métal alcalin ou alcalino-terreux, par exemple le permanganate de potassium ;
et leurs mélanges.

De manière préférentielle, l'espèce oxydante, en particulier telle que définie précédemment, est l'espèce prédominante du couple rédox en solution dans l'électrolyte.

De manière avantageuse, l'espèce oxydante n'est pas générée *in situ* au niveau de l'électrolyte. Ainsi, de préférence, l'espèce oxydante est présente dans l'électrolyte aqueux de départ, avant initiation de l'étape d'activation, autrement dit avant l'application à l'électrode des impulsions électriques alternées cathodiques et anodiques.

De manière avantageuse, la forme réduite de l'espèce oxydante (autrement dit, l'espèce réductrice du couple rédox auquel appartient l'espèce oxydante), mise en oeuvre dans l'électrolyte selon l'invention, présente une bonne solubilité dans le milieu aqueux de l'électrolyte, en particulier ne précipite pas dans l'électrolyte au cours du traitement d'activation.

La ou lesdites espèces oxydantes peuvent être présentes dans l'électrolyte en une teneur comprise entre 0,01 et 100 mmol.L⁻¹, en particulier entre 0,1 et 20 mmol.L⁻¹ et plus particulièrement entre 1 et 10 mmol.L⁻¹, par exemple de 1 mmol.L⁻¹.

Selon un mode de réalisation particulier, l'électrolyte pour la mise en oeuvre de la première étape d'activation selon l'invention est un milieu aqueux comprenant 1 mM de ferricyanure, en particulier sous la forme de ferricyanure de potassium.

Selon un autre mode de réalisation particulier, l'électrolyte pour la mise en oeuvre de la première étape d'activation selon l'invention est un milieu aqueux comprenant 1 mM de chlorure de fer (III).

Selon un autre mode de réalisation particulier, l'électrolyte pour la mise en oeuvre de la première étape d'activation selon l'invention est un milieu aqueux comprenant 1 mM de periodate, en particulier sous la forme de periodate de sodium.

Selon un autre mode de réalisation particulier, l'électrolyte pour la mise en oeuvre de la première étape d'activation selon l'invention est un milieu aqueux comprenant 1 mM de permanganate, en particulier sous la forme de permanganate de potassium.

Ledit électrolyte peut comporter, d'une manière classique, hormis la ou lesdites espèce(s) oxydante(s), un sel ionique, dit sel de fond. Ce sel de fond est mis en oeuvre pour procurer au milieu électrolyte une conductivité ionique satisfaisante.

Le sel de fond peut être notamment du KCl, du LiCl, du NaCl. En particulier, il s'agit de KCl.

La teneur en sel(s) de fond peut être comprise entre 10 mmol.L⁻¹ (également noté mM) et 500 mmol.L⁻¹, en particulier entre 50 mmol.L⁻¹ et 200 mmol.L⁻¹, par exemple être d'environ 100 mmol.L⁻¹.

Comme indiqué précédemment, l'excitation électrique pour opérer la première étape d'activation électrochimique selon le procédé de l'invention est opérée sous la forme d'une alternance d'impulsions cathodiques et anodiques, en tension (potentiel) ou en courant. L'alternance des impulsions cathodiques et anodiques suivant ladite première étape d'activation électrochimique peut présenter l'une ou l'autre des caractéristiques décrites précédemment.

De préférence, il s'agit d'une alternance périodique d'impulsions cathodiques et anodiques, en particulier l'excitation électrique est formée de l'alternance périodique d'une impulsion cathodique et d'une impulsion anodique.

Selon une première variante de réalisation, la première étape d'activation selon l'invention est réalisée par impulsions électriques en tension (potentiel).

En particulier, la première étape d'activation selon l'invention peut être opérée par alternance périodique d'impulsions cathodiques et anodiques en tension, en particulier par alternance périodique d'une impulsion cathodique en tension et d'une impulsion anodique en tension (autrement dit, suivant la répétition de l'enchaînement : 1 impulsion cathodique en tension - 1 impulsion anodique en tension, etc.).

Selon un mode de réalisation particulier, l'amplitude, en valeur absolue, des impulsions cathodiques et anodiques en tension peut être comprise entre 0,5 et 1,5 V, en particulier entre 0,6 et 1,5 V et plus particulièrement entre 0,8 et 1,3 V.

Selon une autre variante de réalisation, la première étape d'activation selon l'invention est réalisée par impulsions électriques en courant.

En particulier, la première étape d'activation selon l'invention peut être opérée par alternance périodique d'impulsions cathodiques et anodiques en courant, en particulier par alternance périodique d'une impulsion cathodique et d'une impulsion anodique en courant. Selon un mode de réalisation particulier, l'amplitude, en valeur absolue, des impulsions cathodiques et anodiques en tension peut être comprise entre 0,1 et 100 µA.cm⁻², en particulier entre 0,2 et 50 µA.cm⁻² et plus particulièrement entre 0,5 et 25 µA.cm⁻².

De préférence, l'ensemble des impulsions cathodiques et anodiques (en tension ou en courant) présentent la même amplitude, en valeur absolue. L'amplitude des pulses peut être notamment ajustée au regard de la concentration de l'espèce oxydante présente dans l'électrolyte.

De préférence, l'excitation en potentiel est opérée avec une amplitude de pulses allant de - 1,5 V à + 1,5 V, en particulier de - 1,2 V à + 1,2 V et plus particulièrement de - 0,8 V à + 0,8 V.

De préférence, l'excitation en courant est opérée avec une amplitude de pulses allant de - 100 µA.cm⁻² à + 100 µA.cm⁻², en particulier de - 50 µA.cm⁻² à + 50 µA.cm⁻² et plus particulièrement de - 25 µA.cm⁻² à + 25 µA.cm⁻².

Selon un mode de réalisation particulier, la durée des pulses cathodiques et anodiques est comprise entre 5 et 500 ms, en particulier entre 10 et 250 ms et plus particulièrement entre 100 ms et 200 ms, de préférence de 100 ms. De préférence, l'ensemble des pulses cathodiques et anodiques ont la même durée.

La durée de ladite première étape du traitement d'activation selon l'invention dépend notamment des paramètres retenus pour les impulsions, en particulier de l'amplitude des impulsions appliquées et de leur nature (en tension ou en courant).

De préférence, la première étape d'activation électrochimique selon l'invention est opérée pendant une durée suffisante pour obtenir les propriétés électrochimiques souhaitées, en particulier pour obtenir la réactivité électrochimique souhaitée. De fait, sans vouloir être lié par la théorie, au-delà d'une certaine durée du traitement d'excitation électrique selon l'étape (i), il n'est plus observé d'amélioration de la réactivité électrochimique de l'électrode DLC, autrement dit la réactivité électrochimique de l'électrode DLC ne varie plus.

La durée de ladite première étape d'activation électrochimique selon l'invention, opérée avec des impulsions en tension, peut être plus particulièrement d'au moins 30 minutes, en particulier d'au moins 40 minutes, plus particulièrement d'au moins 50 minutes et avantageusement comprise entre 60 et 70 minutes.

La durée de ladite première étape d'activation électrochimique selon l'invention, opérée avec des impulsions en courant, peut être plus particulièrement d'au moins 80 minutes, en particulier d'au moins 100 minutes, notamment d'au moins 120 minutes et plus particulièrement de 150 minutes.

De préférence, la première étape du traitement d'activation selon l'invention peut être opérée à une température comprise entre 15 et 30 °C, avantageusement à température ambiante (23°C).

Selon un mode de réalisation particulièrement préféré, ladite première étape du traitement d'activation électrochimique selon l'invention est opérée par application à ladite électrode DLC, dans un électrolyte aqueux comprenant 1 mM d'une espèce oxydante telle que définie précédemment, d'une excitation électrique formée de l'alternance périodique d'une impulsion cathodique et d'une impulsion anodique, en tension, lesdites impulsions cathodiques et anodiques présentant une durée, tᵢ, de 100 ms, et d'amplitude de -0,8 V et + 0,8 V.

Dans le cadre de ce mode de réalisation particulier, la durée de ladite première étape d'activation est d'au moins 40 minutes, en particulier d'au moins 50 minutes, plus particulièrement d'au moins 60 minutes, de préférence de 60 minutes.

Selon un autre mode de réalisation particulièrement préféré, ladite première étape du traitement d'activation électrochimique selon l'invention est opérée par application à ladite électrode DLC, dans un électrolyte aqueux comprenant 10 mM d'une espèce oxydante telle que définie précédemment, d'une excitation électrique formée de l'alternance périodique d'une impulsion cathodique et d'une impulsion anodique, en tension, lesdites impulsions cathodiques et anodiques présentant une durée, tᵢ, de 100 ms, et d'amplitude de -1,2 V et + 1,2 V.

Dans le cadre de ce mode de réalisation particulier, la durée de ladite première étape d'activation est d'au moins 10 minutes, en particulier d'au moins 15 minutes, plus particulièrement comprise entre 15 et 25 minutes, de préférence de 20 minutes.

Selon encore un autre mode de réalisation particulier, la première étape du traitement d'activation électrochimique selon l'invention est opérée par application à ladite électrode DLC, dans un électrolyte aqueux comprenant 1 mM d'une espèce oxydante telle que définie précédemment, d'une excitation électrique formée de l'alternance périodique d'une impulsion cathodique et d'une impulsion anodique, en courant, lesdites impulsions cathodiques et anodiques présentant une durée, tᵢ, de 100 ms, et d'amplitude de -20 µA et + 20 µA.

Dans le cadre de ce mode de réalisation particulier, la durée de ladite première étape d'activation est d'au moins 80 minutes, en particulier d'au moins 100 minutes, notamment d'au moins 120 minutes, plus particulièrement de 150 minutes.

### (ii) Deuxième étape d'activation

Comme indiqué précédemment, la deuxième étape (ii) du traitement d'activation électrochimique selon l'invention est réalisée dans un électrolyte aqueux qui, à la différence de l'électrolyte mis en oeuvre pour la première étape (i) du traitement d'activation ne comprend pas d'espèce électro-active.

Par « espèce électro-active », on entend désigner une espèce qui s'oxyde ou se réduit par voie électrochimique dans les conditions électrochimiques mises en oeuvre.

L'électrolyte exempt d'espèce électro-active présente plus particulièrement un caractère oxydant, autrement dit comprend un ou plusieurs composés oxydants.

De préférence, il comprend un ou plusieurs composés oxydants choisis parmi les perchlorates, tels que NaClO₄, KClO₄, LiClO₄ ; les sulfates, tels que Na₂SO₄, K₂SO₄, Li₂SO₄ ; les acides tels que HClO₄, H₃PO₄, H₂SO₄, et leurs mélanges.

De préférence, le milieu aqueux de l'électrolyte au contact duquel est opérée la deuxième étape du traitement d'activation est formé par de l'eau.

Selon un mode de réalisation particulier, l'électrolyte mis en oeuvre pour ladite deuxième étape d'activation est de l'acide sulfurique (H₂SO₄) dilué dans l'eau.

La concentration en composé(s) oxydant(s), en particulier la concentration en acide sulfurique, dans l'électrolyte mis en oeuvre pour opérer ladite deuxième étape d'activation, peut être notamment comprise entre 0,05 et 1,0 mol.L⁻¹, en particulier entre 0,1 et 1,0 mol.L⁻¹.

Comme indiqué précédemment, l'excitation électrique pour opérer ladite deuxième étape d'activation électrochimique selon le procédé de l'invention est opérée sous la forme d'une alternance d'impulsions cathodiques et anodiques, en tension (potentiel).

En particulier, comme illustré dans les exemples qui suivent, les inventeurs ont montré qu'une application, pour cette deuxième étape, de l'excitation sous la forme d'impulsions en courant ne permet pas d'accéder à l'amélioration recherchée des propriétés électrochimiques de l'électrode DLC.

L'alternance des impulsions cathodiques et anodiques en tension suivant ladite deuxième étape d'activation électrochimique peut présenter l'une ou l'autre des caractéristiques décrites précédemment.

De préférence, ladite deuxième étape d'activation selon l'invention peut être opérée par alternance d'impulsions cathodiques et anodiques en tension, en particulier par alternance d'une unique impulsion cathodique en tension et d'une unique impulsion anodique en tension (autrement dit, suivant la répétition de l'enchaînement : 1 impulsion cathodique en tension - 1 impulsion anodique en tension, etc.).

Selon un mode de réalisation particulier, l'amplitude, en valeur absolue, des impulsions cathodiques et anodiques en tension peut être comprise entre 0,8 et 1,9 V, en particulier entre 1,0 et 1,8 V et plus particulièrement entre 1,2 et 1,5 V.

De préférence, l'ensemble des impulsions cathodiques et anodiques en tension présentent la même amplitude, en valeur absolue. De préférence, l'excitation est opérée avec une amplitude de pulses allant de - 1,9 V à + 1,9 V, en particulier de - 1,5 V à + 1,5 V et plus particulièrement de - 1,3 V à + 1,3 V.

Selon un mode de réalisation particulier, la durée des pulses cathodiques et anodiques est comprise entre 5 et 500, en particulier entre 10 et 250 et plus particulièrement entre 100 ms et 200 ms, de préférence de 100 ms. De préférence, l'ensemble des pulses cathodiques et anodiques ont la même durée.

La durée de ladite deuxième étape du traitement d'activation peut être plus particulièrement ajustée au regard des paramètres retenus pour les impulsions, en particulier de l'amplitude des impulsions appliquées.

De préférence, la deuxième étape d'activation électrochimique selon l'invention est opérée pendant une durée suffisante pour obtenir les propriétés électrochimiques souhaitées, en particulier pour obtenir la réactivité électrochimique souhaitée. De fait, sans vouloir être lié par la théorie, au-delà d'une certaine durée du traitement d'excitation électrique selon l'étape (ii), il n'est plus observé d'amélioration de la réactivité électrochimique de l'électrode DLC, autrement dit la réactivité électrochimique de l'électrode DLC ne varie plus.

La durée de ladite deuxième étape d'activation électrochimique selon l'invention peut être plus particulièrement d'au moins 15 minutes, en particulier d'au moins 20 minutes, plus particulièrement entre 20 et 30 minutes, notamment de 20 minutes.

De préférence, ladite deuxième étape du traitement d'activation selon l'invention peut être opérée à une température comprise entre 15 et 30°C, avantageusement à température ambiante (23°C).

Selon un mode de réalisation particulièrement préféré, ladite deuxième étape du traitement d'activation électrochimique selon l'invention est opérée par application, à ladite électrode DLC ayant été préalablement soumise à ladite première étape d'activation, au contact d'un électrolyte aqueux comprenant 0,5 M d'acide sulfurique, d'une excitation électrique formée de l'alternance périodique d'une impulsion cathodique et d'une impulsion anodique, en tension, lesdites impulsions cathodiques et anodiques présentant une durée, tᵢ, de 100 ms, et d'amplitude de -1,3 V et + 1,3 V.

Dans le cadre de ce mode de réalisation particulier, la durée de ladite deuxième étape d'activation peut être plus particulièrement d'au moins 15 minutes, en particulier d'au moins 20 minutes, de préférence de 20 minutes.

Il est entendu que l'ensemble des caractéristiques indiquées précédemment pour lesdites première et deuxième étape du traitement électrochimique d'activation selon l'invention peuvent être combinées pour définir des modes particuliers de réalisation du procédé d'activation selon l'invention.

### Dispositif pour l'activation électrochimique

Il appartient à l'homme du métier de mettre en oeuvre un dispositif électrochimique adéquat pour la mise en oeuvre du traitement d'activation électrochimique selon l'invention.

D'une manière générale, le dispositif pour mettre en oeuvre le procédé d'activation selon l'invention est un montage à trois électrodes, autrement dit une cellule électrochimique équipée d'une électrode de travail à base de carbone amorphe DLC, d'une électrode de référence et d'une contre-électrode.

L'électrode de travail est constituée de l'électrode DLC à activer. Comme indiqué précédemment, il peut s'agir par exemple d'un wafer de silicium supportant une couche de DLC, ou encore d'une électrode individuelle à base de DLC.

Toute électrode de référence peut être utilisée. Il peut s'agir par exemple d'une électrode de référence Ag/AgCl, ou encore d'une électrode de type ECS (Electrode au Calomel Saturé), ou encore d'une électrode de pseudo-référence en DLC.

La contre-électrode peut être constituée de tout matériau conducteur, en particulier en platine. Alternativement, il peut encore s'agir d'une électrode en DLC.

L'excitation électrique sous forme d'impulsions cathodiques et anodiques alternées peut être générée par un potentiostat adapté.

### APPLICATION

Comme évoqué précédemment, le procédé d'activation selon l'invention permet d'accéder à des électrodes à base de DLC présentant d'excellentes propriétés électrochimiques, en particulier une réactivité électrochimique et une surface active élevées, une bonne reproductibilité, homogénéité et stabilité de ces performances électrochimiques.

Les électrodes à base de DLC activées, obtenues à l'issue du procédé d'activation selon l'invention, éventuellement suivi d'une étape de découpe pour accéder aux dimensions souhaitées, peuvent être avantageusement utilisées dans des dispositifs ou capteurs électrochimiques pour l'analyse physico-chimique de liquides, par exemple pour la détection d'éléments contaminants, notamment pour des applications de suivi de la qualité de l'eau ou d'autres effluents (analyse directement au niveau du cours d'eau, suivi des procédés de dépollution dans les stations d'épuration, etc.).

Elles peuvent encore être utilisées comme électrodes dans des détecteurs en biotechnologie, par exemple pour le suivi d'un procédé de bio-production.

Bien entendu, l'invention n'est pas limitée aux applications décrites ci-dessus, et d'autres applications des électrodes DLC activées selon l'invention peuvent être envisagées.

L'invention va maintenant être décrite au moyen des exemples et figures suivants, donnés bien entendu à titre illustratif et non limitatif de l'invention.

### Exemple

Les essais suivants ont été réalisés à l'aide d'une cellule électrochimique équipée des trois électrodes suivantes :
- une électrode de travail : électrode DLC de surface de 21 mm², formée d'une couche de DLC de 50 nm d'épaisseur déposée sur un wafer en silicium.

Le DLC est préalablement déposé par pulvérisation cathodique magnétron à une température de 25°C et une puissance de 1 kW en présence d'argon comme gaz vecteur, sur un support en silicium désoxydé chimiquement en faces avant et arrière, afin d'améliorer la conductivité électrique transversale.
- une électrode de référence : électrode DLC de même nature que l'électrode de travail ; et
- une contre-électrode : électrode DLC de même nature que l'électrode de travail.

Les conditions du traitement électrochimique en une ou plusieurs étapes d'excitation électrique sont détaillées pour chacun des essais réalisés dans les exemples qui suivent. Les traitements sont opérés à température ambiante (23°C).

Les pulses sont appliquées sur l'électrode de travail à l'aide de la technique Modulo Bat (MB).

L'excitation électrique sous forme d'impulsions est générée par un potentiostat (référence utilisée : Biologie VPM300).

### Evaluation des performances électrochimiques

L'évolution des propriétés électrochimiques (réactivité électrochimique et surface active) des électrodes dans les exemples suivants est évaluée par voltammétrie cyclique (CV), en présence d'un mélange équimolaire de ferri/ferrocyanure de potassium à 1 mM dilué dans 0,1 M de KCl.

La réactivité électrochimique d'une électrode est considérée comme étant d'autant meilleure que la différence entre le potentiel du pic anodique et celui du pic cathodique, ΔEₚ, est faible. L'influence du traitement électrochimique sur la surface active de l'électrode peut être appréciée par l'évolution de l'intensité du courant anodique et/ou cathodique. Plus l'intensité du courant anodique et/ou cathodique, en valeur absolue, est élevée, plus le nombre de sites actifs au niveau de l'électrode DLC est élevé.

### Exemple 1

### Activation électrochimique de l'électrode selon un procédé conforme à l'invention

### 1.1. Activation selon le procédé de l'invention

Les conditions du traitement d'activation électrochimique sont les suivantes :
1^{ère} étape : traitement électrochimique dans un électrolyte aqueux comprenant 1 mM d'un mélange équimolaire de ferri/ferrocyanure de potassium et 100 mM de KCl ; Pulses alternées en tension suivant l'enchaînement 1 pulse cathodique - 1 pulse anodique :
   durée d'une pulse cathodique/anodique : 0,1 seconde ; amplitude des pulses : + 0,8 V pour une pulse anodique ; -0,8 V pour une pulse cathodique.
   Durée totale d'excitation : 60 minutes

2^{ème} étape : traitement électrochimique dans un électrolyte aqueux comprenant 0,5 M d'acide sulfurique
   Pulses alternées en tension suivant l'enchaînement 1 pulse cathodique - 1 pulse anodique : durée d'une pulse cathodique/anodique : 0,1 seconde ; amplitude des pulses : + 1,3 V pour une pulse anodique ; -1,3 V pour une pulse cathodique.
   Durée totale d'excitation : 20 minutes.

### Evaluation des performances électrochimiques

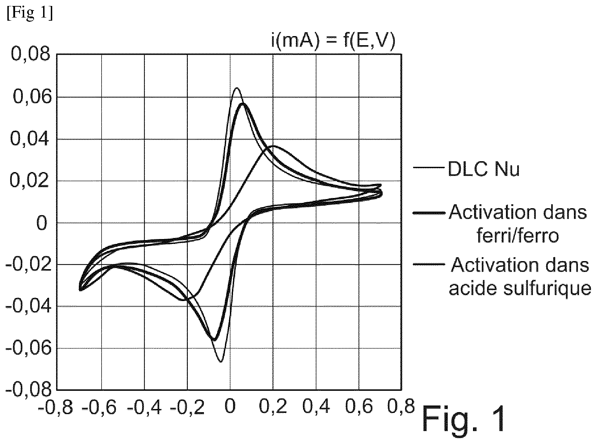

La surface de l'électrode DLC est caractérisée par voltammétrie cyclique (CV) avant activation, après la 1^{ère} étape du traitement d'activation et après la 2^{ème} étape du traitement d'activation (figure 1).

Les valeurs électrochimiques obtenues avant activation et après chacune des deux étapes du traitement d'activation selon l'invention sont rassemblées dans le tableau suivant.

**[Tableau 1]**

| Etape | Eₐ (mV) | E_{c} (mV) | iₐ (µA) | i_{c} (µA) | ΔEₚ (mV) |
|---|---|---|---|---|---|
| Avant activation | 200 | -215 | 37 | -37 | 415 |
| Après la 1^{ère} étape | 58 | -75 | 58 | -57 | 133 |
| Après la 2^{ème} étape | 28 | -42 | 64 | -66 | 70 |

Les résultats montrent que l'application consécutive des deux étapes du traitement d'activation selon l'invention permet de réduire, de manière significative, la valeur ΔEₚ puisque celle-ci est réduite d'une valeur initiale avant activation de 415 mV à 70 mV à l'issue des deux étapes du traitement d'activation.

Il peut également être noté que l'intensité des courants anodique et cathodique augmente, en valeur absolue, de 37 µA à 64/66 µA après les deux étapes d'activation.

### 1.2. Variations des durées d'activation

Le traitement d'activation électrochimique tel que décrit au point 1.1. précité est reproduit en faisant varier la durée de la première étape du traitement électrochimique jusqu'à 90 minutes ; et la durée de la deuxième étape du traitement électrochimique (à l'issue d'une durée d'excitation selon la première étape de 90 minutes) jusqu'à 50 minutes.

### Evaluation des performances électrochimiques

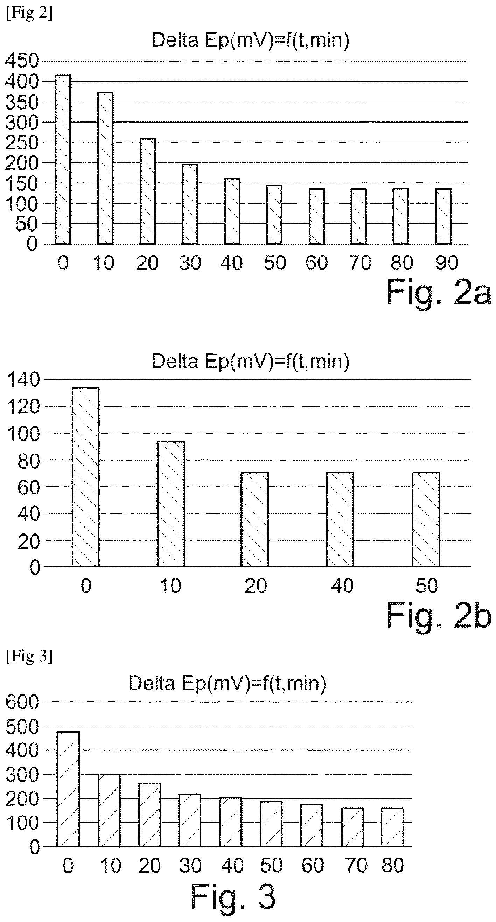

Les résultats de la figure 2 montrent qu'une réactivité optimale est atteinte pour une première étape de traitement d'activation opérée dans les conditions précitées d'une durée de 60 minutes, suivie d'une deuxième étape de traitement d'activation opérée dans les conditions précitées de 20 minutes.

### 1.3. Reproductibilité du procédé d'activation

La reproductibilité du procédé d'activation selon l'invention est vérifiée.

Trois électrodes DLC distinctes ont été soumis aux deux étapes successives du traitement d'activation dans les conditions décrites en exemple 1.1.

### Evaluation des performances électrochimiques

Les performances électrochimiques, ΔEₚ et iₘₐₓ, obtenues pour les trois électrodes, avant la première étape du traitement d'activation, après la première étape du traitement électrochimique et à l'issue de la deuxième étape du traitement électrochimique, sont présentées dans le tableau suivant.

**[Tableau 2]**

| **Performances électrochimiques** | | **Electrode 1** | **Electrode 2** | **Electrode 3** |
|---|---|---|---|---|
| ΔEₚ (mV) | Avant activation | 415 | 520 | 430 |
| | Après la 1^{ère} étape | 133 | 126 | 130 |
| | Après la 2^{eme} étape | 70 | 72 | 70 |
| Iₘₐₓ (µA) | Avant activation | 37 | 35 | 34,6 |
| | Après la 1^{ère} étape | 57,5 | 57 | 56 |
| | Après la 2^{ème} étape | 65 | 66 | 64 |

Ces résultats montrent que le processus d'activation de surface selon l'invention est, d'une part, reproductible.

D'autre part, le procédé d'activation selon l'invention permet non seulement d'améliorer la réactivité électrochimique et d'augmenter le nombre de sites actifs, mais également d'homogénéiser ces paramètres. Ainsi, quelles que soient les valeurs de ΔEₚ et iₘₐₓ des électrodes DLC avant activation, les électrodes présentent des valeurs de ΔEₚ et iₘₐₓ similaires et significativement accrues à l'issue des deux étapes du traitement d'activation selon l'invention.

### 1.4. Stabilité des électrodes activées

Les performances de l'électrode DLC activée selon le procédé d'activation en deux étapes selon l'invention, opéré dans les conditions décrites en exemple 1.1., sont évaluées après plusieurs jours d'exposition de l'électrode activée à l'air libre.

Les résultats des propriétés électrochimiques, ΔEₚ et iₘₐₓ, de l'électrode DLC juste après activation, puis après un jour, 2 jours et 10 jours d'exposition à l'air libre, sont présentés dans le tableau suivant.

**[Tableau 3]**

| **Temps** | **Eₐ (mV)** | **E_{c} (mV)** | **iₐ (µA)** | **i_{c} (µA)** | **ΔEₚ** |
|---|---|---|---|---|---|
| Après activation | 28 | -42 | 64 | -66 | 70 |
| Après 1 jour | 30 | -42 | 62 | -63 | 72 |
| Avant 2 jours | 35 | -48 | 59 | -62 | 83 |
| Après 10 jours | 38 | 50 | 59 | -62 | 88 |

Ces résultats montrent que l'électrode DLC activée selon l'invention présente une bonne stabilité à l'oxydation dans le temps. L'exposition de l'électrode DLC à l'air libre entraine une faible diminution de la réactivité de l'électrode et du nombre de sites actifs. Ce comportement peut être dû à l'oxydation des terminaisons hydrogènes ou encore à l'encrassement de la surface de l'électrode par des substances contaminantes, mais reste limité et très acceptable.

### Exemple 2

### Etude de l'effet de la durée des pulses

Une électrode DLC a été soumise à la première étape du traitement électrochimique d'activation selon l'invention, décrit dans l'exemple 1.1. précédent, excepté le fait que la durée des pulses cathodiques et anodiques alternées a été augmentée à 0,2 seconde.

### Evaluation des performances électrochimiques

La figure 3 représente les résultats de la réactivité électrochimique de l'électrode (ΔEₚ) à l'issue de la première étape du traitement d'activation pour différentes durées d'excitation électrique.

L'électrode DLC présente une valeur de ΔEₚ après 70 minutes d'excitation avec des pulses alternées de 0,2 ms de 165 mV, tandis qu'une excitation avec des pulses alternées de 0,1 ms permettait d'atteindre une valeur de ΔEₚ, après 70 minutes d'excitation, de 130 mV (exemple 1.2.).

Il peut être noté que la durée de cette première étape de traitement opérée avec des pulses de 0,2 seconde, nécessaire pour atteindre une réactivité électrochimique similaire à celle atteinte avec un temps de pulses de 0,1 seconde, est plus longue, avec une valeur de ΔEₚ finale qui demeure supérieure à la valeur atteinte avec des pulses de 0,1 seconde.

### Exemple 3

### Première étape du traitement d'activation dans l'électrolyte ferri/ferrocyanure à 10 mM et une amplitude de pulses de 1,2 V

Une électrode DLC a été soumise à la première étape du traitement d'activation décrite dans l'exemple 1.1. précédent, excepté le fait que la concentration de l'espèce oxydante (ferricyanure) dans l'électrolyte a été augmentée à 10 mM et l'amplitude des pulses en potentiel, en valeur absolue, augmentée à 1,2 V.

Les conditions de cette première étape d'activation sont donc les suivantes.

### 1^{ère} étape du traitement d'activation dans un électrolyte aqueux comprenant 10 mM d'un mélange équimolaire ferri/ferrocyanure et 100 mM KCl

Pulses alternées en tension (suivant l'enchaînement 1 pulse cathodique - 1 pulse anodique : durée d'une pulse cathodique/anodique : 0,1 seconde ; amplitude des pulses : + 1,2 V pour une pulse anodique ; -1,2 V pour une pulse cathodique.

Durée totale d'excitation : jusqu'à 40 minutes.

### Evaluation des performances électrochimiques

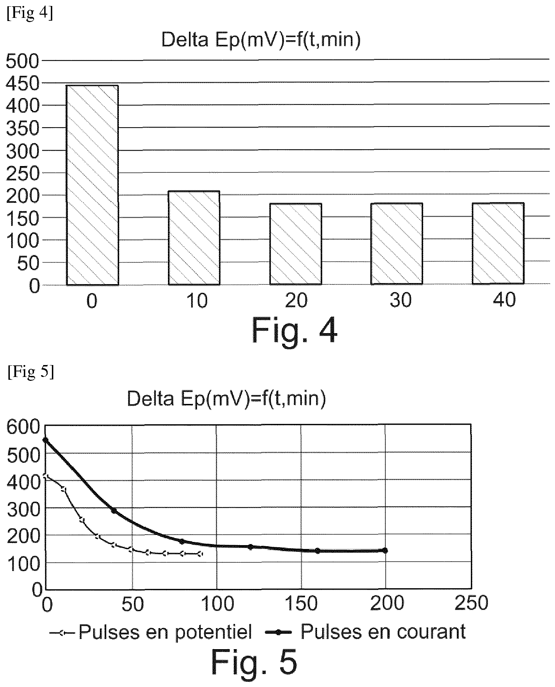

La figure 4 présente les résultats de la réactivité électrochimique de l'électrode (ΔEₚ) à l'issue de la première étape du traitement d'activation pour différentes durées d'excitation.

Les résultats de la figure 4 montrent que la réactivité électrochimique (ΔEₚ) pouvant être atteinte dans les conditions de la première étape du traitement électrochimique décrites précédemment (concentration en espèce oxydante de 10 mM et amplitude de pulses de 1,2 V) est légèrement plus faible que celle pouvant être atteinte dans les conditions de l'exemple 1 (concentration en espèce oxydante de 1 mM et amplitude de pulses de 0,8 V) : ΔEₚ final de 180 mV *versus* 130 mV pour l'exemple 1.

Néanmoins, il est à noter que la durée du traitement d'excitation est raccourcie comparativement à l'exemple 1.

### Exemple 4

### Activation selon le procédé de l'invention avec une première étape d'excitation par pulses de courant

Une électrode DLC a été soumise à la première étape du traitement d'activation décrit dans l'exemple 1.1. précédent, excepté le fait que l'excitation a été opérée par impulsions en courant et non en tension.

Les conditions de cette première étape d'activation sont donc les suivantes :
1^{ère} étape du traitement d'activation dans un électrolyte aqueux comprenant 10 mM d'un mélange équimolaire ferri/ferrocyanure et 100 mM KCl

Pulses alternées en courant (suivant l'enchaînement 1 pulse cathodique - 1 pulse anodique : durée d'une pulse cathodique/anodique : 0,1 seconde ; amplitude des pulses : + 20 µA pour une pulse anodique (correspondant à une densité de courant de - 1 µA.cm⁻²) ; - 20 µA pour une pulse cathodique (correspondant à une densité de courant de + 1 µA.cm⁻²).

Durée totale d'excitation : jusqu'à 200 minutes.

### Evaluation des performances électrochimiques

La figure 5 présente l'évolution de ΔEₚ à l'issue de la première étape du traitement d'activation, opérée avec des pulses en potentiel (exemple 1) ou des pulses en courant, en fonction de la durée d'excitation.

Il est possible d'obtenir des performances similaires en termes de réactivité électrochimique avec une excitation par des pulses en courant, avec un temps de traitement de 2 heures et 30 minutes, donc plus long comparativement au traitement opéré avec des pulses en potentiel (exemple 1).

### Exemple 5

### Deuxième étape d'excitation avec des pulses en courant (hors invention)

L'électrode DLC, à l'issue de la première étape d'excitation avec des pulses en courant telle que décrite dans l'exemple 4 précitée, d'une durée de 2 heures et 30 minutes, a été soumise à une deuxième étape de traitement électrochimique opérée par excitation par des pulses en courant et non en potentiel.

Les conditions de la deuxième étape du traitement électrochimique sont les suivantes : 2^{ème} étape : traitement électrochimique dans un électrolyte aqueux comprenant 0,5 M d'acide sulfurique ;
Pulses alternées en courant suivant l'enchaînement 1 pulse cathodique - 1 pulse anodique : durée d'une pulse cathodique/anodique : 0,1 seconde ; amplitude des pulses : + 20 µA (correspondant à une densité de courant de + 1 µA.cm⁻²) pour une pulse anodique ; -20 µA (correspondant à une densité de courant de - 1 µA.cm⁻²) pour une pulse cathodique. Durée totale d'excitation : 40 minutes et 80 minutes.

### Evaluation des performances électrochimiques

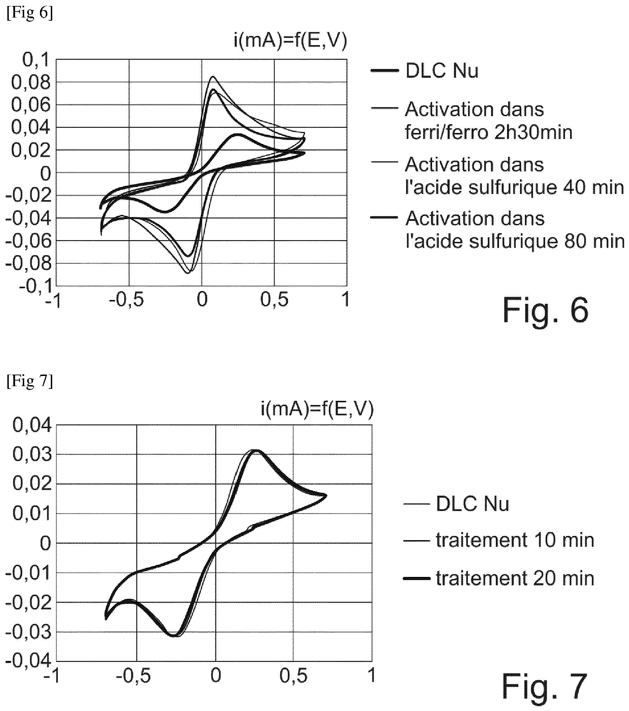

La figure 6 présente les voltamogrammes réalisés pour l'électrode DLC avant activation, à l'issue de la première étape du traitement électrochimique (réalisé suivant les conditions de l'exemple 4) et à l'issue de la deuxième étape du traitement électrochimique réalisée avec des pulses en courant.

Il peut être observé que la valeur de ΔEₚ varie d'une manière négative et non significative après la deuxième étape de traitement opérée avec des pulses en courant.

### Exemple 6

### Première étape d'excitation avec des pulses cathodiques en potentiel (hors invention)

Une électrode DLC a été soumise à une première étape de traitement électrochimique telle que décrite dans l'exemple 1.1. précédent, excepté le fait que l'excitation a été opérée uniquement avec des impulsions cathodiques (et donc non alternées) en potentiel.

Les conditions de ce traitement électrochimique sont les suivantes :
Electrolyte aqueux comprenant 1 mM d'un mélange équimolaire ferri/ferrocyanure de potassium et 100 mM de KCl ;
Pulses cathodiques en potentiel : durée d'une pulse cathodique : 0,1 seconde ; amplitude des pulses cathodiques : - 0,8 V.

Durée totale d'excitation : 10 et 20 minutes

### Evaluation des performances électrochimiques

La figure 7 présente les voltamogrammes réalisés pour l'électrode DLC avant activation, après 10 minutes et 20 minutes de la première étape de traitement électrochimique par pulses cathodiques.

Il peut être observé que le traitement de l'électrode DLC par excitation uniquement avec des pulses cathodiques en potentiel n'a aucun effet sur les caractéristiques électrochimiques de l'électrode, comparativement à un traitement opéré suivant le procédé de l'invention avec des pulses alternées (exemple 1).

### Exemple 7

### Première étape d'excitation avec des pulses anodiques en potentiel (hors invention)

Une électrode DLC a été soumise à la première étape du traitement d'activation décrit dans l'exemple 1.1. précédent, excepté le fait que l'excitation a été opérée uniquement avec des impulsions anodiques (et donc non alternées) en potentiel.

Les conditions de ce traitement électrochimique sont les suivantes :
Electrolyte aqueux comprenant 1 mM d'un mélange équimolaire ferri/ferrocyanure et 100 mM de KCl ;
Pulses anodiques en potentiel : durée d'une pulse cathodique : 0,1 seconde ; amplitude des pulses cathodiques : + 0,8 V.

Durée totale d'excitation : 10 minutes et 20 minutes

### Evaluation des performances électrochimiques

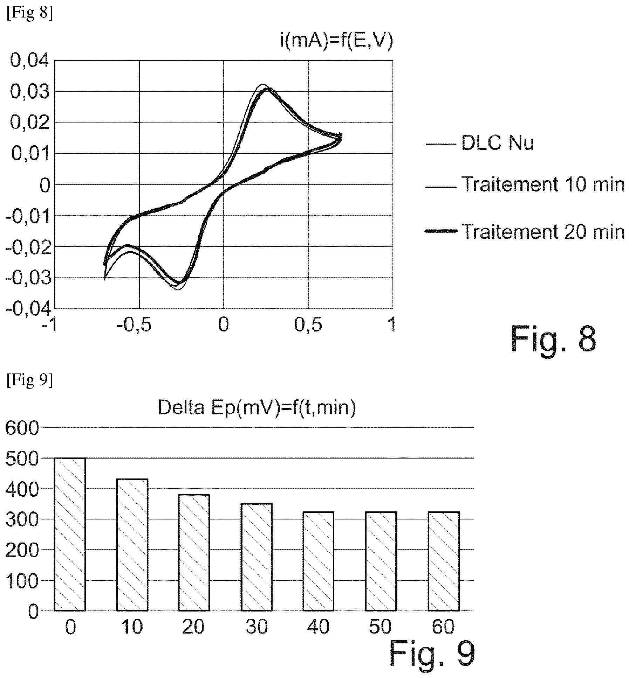

La figure 8 présente les voltamogrammes réalisés pour l'électrode DLC avant activation, après 10 minutes et 20 minutes de la première étape de traitement électrochimique par pulses anodiques.

Il peut être observé que le traitement de l'électrode DLC par excitation uniquement avec des pulses anodiques en potentiel n'a aucun effet sur les caractéristiques électrochimiques de l'électrode, comparativement à un traitement opéré suivant le procédé de l'invention avec des pulses alternées (exemple 1).

### Exemple 8

### Première étape d'excitation dans un électrolyte en l'absence d'espèce oxydante (hors invention)

Une électrode DLC a été soumise à la première étape du traitement d'activation décrit dans l'exemple 1.1. précédent, excepté le fait que l'excitation a été opérée dans un électrolyte dépourvu d'espèce oxydante selon l'invention).

Les conditions de ce traitement électrochimique sont les suivantes :
Electrolyte aqueux comprenant 100 mM de KCl ;
Pulses alternés en tension suivant l'enchaînement 1 pulse cathodique - 1 pulse anodique : durée d'une pulse cathodique/anodique : 0,1 seconde ; amplitude des pulses : + 0,8 V pour une pulse anodique ; -0,8 V pour une pulse cathodique.

Durée totale d'excitation : jusqu'à 60 minutes

### Evaluation des performances électrochimiques

La figure 9 représente les résultats de la réactivité électrochimique de l'électrode (ΔEₚ) à l'issue du traitement électrochimique opéré dans l'électrolyte en l'absence d'espèce oxydante pour différentes durées d'excitation électrique.

Il peut être observé que le traitement de l'électrode DLC dans un électrolyte comprenant uniquement le KCl, en l'absence d'espèce oxydante, conduit à une amélioration de la réactivité électrochimique très faible (ΔEₚ de 325 mV après 40 minutes). La deuxième étape d'activation n'a en conséquence pas été réalisée.

### Exemple 9

### Première étape d'excitation dans un électrolyte comprenant du sel de Mohr (hors invention)

Une électrode DLC a été soumise à la première étape du traitement d'activation décrit dans l'exemple 1.1. précédent, excepté le fait que l'excitation a été opérée dans un électrolyte comprenant 1 mM de sel de Mohr (sulfate d'ammonium et de fer (II) hexahydraté (NH₄)₂Fe(SO₄)₂.6H₂O) dans 0,1 M KCl.

Les conditions de ce traitement électrochimique sont les suivantes :
Electrolyte aqueux comprenant 1 mM de sel de Mohr et 0,1 M KCl Pulses alternés en tension suivant l'enchaînement 1 pulse cathodique - 1 pulse anodique : durée d'une pulse cathodique/anodique : 0,1 seconde ; amplitude des pulses : + 0,8 V pour une pulse anodique ; -0,8 V pour une pulse cathodique.

Durée totale d'excitation : 10 et 20 minutes.

### Evaluation des performances électrochimiques

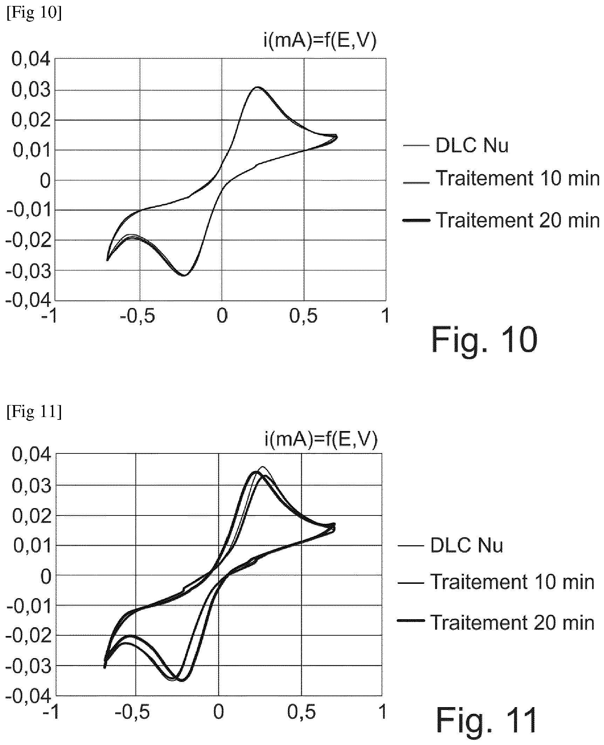

La figure 10 présente les voltamogrammes réalisés pour l'électrode DLC avant traitement électrochimique, après 10 minutes et 20 minutes du traitement électrochimique dans l'électrolyte comprenant du sel de Mohr.

Il peut être observé que le traitement de l'électrode DLC dans l'électrolyte comprenant du sel de Mohr n'a aucun effet sur les caractéristiques électrochimiques de l'électrode, comparativement à un traitement opéré suivant le procédé de l'invention dans un électrolyte comprenant l'espèce oxydante ferricyanure (exemple 1).

### Exemple 10

### Première étape d'excitation dans un électrolyte comprenant du cobaltocène (hors invention)

Une électrode DLC a été soumise à la première étape du traitement d'activation décrit dans l'exemple 1.1. précédent, excepté le fait que l'excitation a été opérée dans un électrolyte comprenant 1 mM de cobaltocène ([Co(η₅C₅H₅)₂]) dans 0,1 M KCl.

Les conditions de ce traitement électrochimique sont les suivantes : Electrolyte aqueux comprenant 1 mM de sel de cobaltocène et 0,1 M KCl Pulses alternés en tension suivant l'enchaînement 1 pulse cathodique - 1 pulse anodique : durée d'une pulse cathodique/anodique : 0,1 seconde ; amplitude des pulses : + 0,8 V pour une pulse anodique ; -0,8 V pour une pulse cathodique. Durée d'activation : 10 et 20 minutes.

### Evaluation des performances électrochimiques

La figure 11 présente les voltamogrammes réalisés pour l'électrode DLC avant traitement électrochimique, après 10 minutes et 20 minutes du traitement électrochimique dans l'électrolyte comprenant du cobaltocène.

Il peut être observé que le traitement de l'électrode DLC dans l'électrolyte comprenant du cobaltocène n'a aucun effet sur les caractéristiques électrochimiques de l'électrode, comparativement à un traitement opéré suivant le procédé de l'invention dans un électrolyte comprenant l'espèce oxydante ferricyanure (exemple 1).

### Exemple 11

### Première étape d'excitation dans un électrolyte comprenant du cyanure de sodium (hors invention)

Une électrode DLC a été soumise à la première étape du traitement d'activation décrit dans l'exemple 1.1. précédent, excepté le fait que l'excitation a été opérée dans un électrolyte comprenant 1 mM de cyanure de sodium dans 0,1 M KCl.

Les conditions de ce traitement électrochimique sont les suivantes : Electrolyte aqueux comprenant 1 mM de cyanure de sodium et 0,1 M KCl Pulses alternés en tension suivant l'enchaînement 1 pulse cathodique - 1 pulse anodique : durée d'un pulse cathodique/anodique : 0,1 seconde ; amplitude des pulses : + 0,8 V pour un pulse anodique ; -0,8 V pour un pulse cathodique. Durée totale d'excitation : 10, 20 et 30 minutes.

### Evaluation des performances électrochimiques

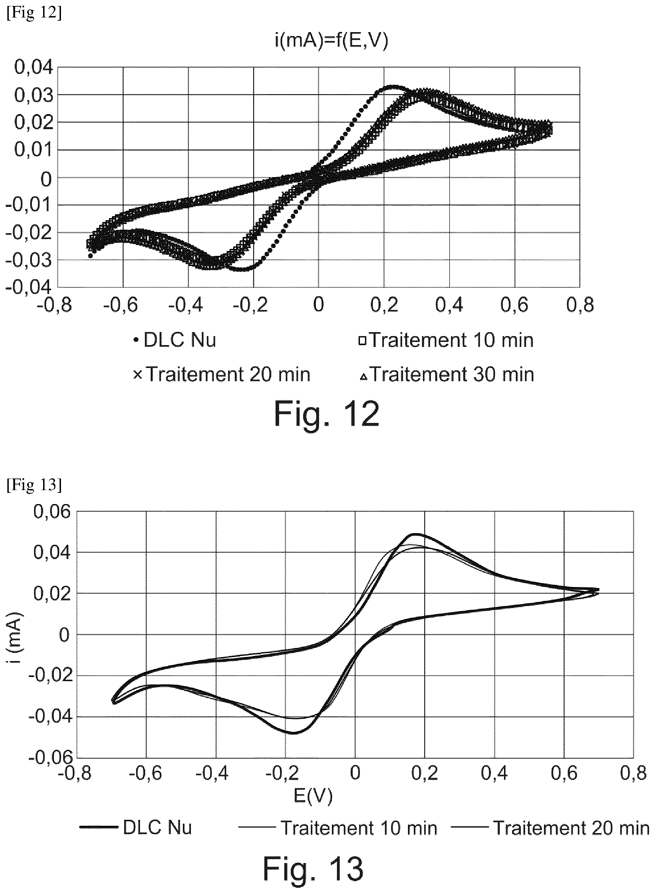

La figure 12 présente les voltamogrammes réalisés pour l'électrode DLC avant traitement électrochimique, après 10 minutes, 20 minutes et 30 minutes du traitement électrochimique dans l'électrolyte comprenant du cyanure de sodium.

Il peut être observé que le traitement de l'électrode DLC dans l'électrolyte comprenant du du cyanure de sodium n'a aucun effet sur les caractéristiques électrochimiques de l'électrode, comparativement à un traitement opéré suivant le procédé de l'invention dans un électrolyte comprenant l'espèce oxydante ferricyanure (exemple 1).

### Exemple 12

### Première étape d'excitation dans un électrolyte comprenant du ferrocène méthanol (hors invention)

Une électrode DLC a été soumise à la première étape du traitement d'activation décrit dans l'exemple 1.1. précédent, excepté le fait que l'excitation a été opérée dans un électrolyte comprenant 1 mM de ferrocène méthanol dans 0,1 M KCl.
Les conditions de ce traitement électrochimique sont les suivantes : Electrolyte aqueux comprenant 1 mM de ferrocène méthanol et 0,1 M KCl ; Pulses alternés en tension suivant l'enchaînement 1 pulse cathodique - 1 pulse anodique : durée d'une pulse cathodique/anodique : 0,1 seconde ; amplitude des pulses : + 0,8 V pour une pulse anodique ; -0,8 V pour une pulse cathodique ;
Durée d'activation : 10 et 20 minutes.

### Evaluation des performances électrochimiques

La figure 13 présente les voltamogrammes réalisés pour l'électrode DLC avant traitement électrochimique, après 10 minutes et 20 minutes du traitement électrochimique dans l'électrolyte comprenant du ferrocène méthanol.

Il peut être observé que le traitement de l'électrode DLC dans l'électrolyte comprenant du ferrocène méthanol n'a aucun effet sur les caractéristiques électrochimiques de l'électrode, comparativement à un traitement opéré suivant le procédé de l'invention dans un électrolyte comprenant l'espèce oxydante ferricyanure (exemple 1).

### Exemple 13

### Première étape d'excitation dans un électrolyte comprenant du ferrocyanure de sodium (hors invention)

Une électrode DLC a été soumise à la première étape du traitement d'activation décrit dans l'exemple 1.1. précédent, excepté le fait que l'excitation a été opérée dans des électrolytes comprenant, respectivement, 1 mM et 2 mM de ferrocyanure de sodium dans 0,1 M KCl.

Les conditions de ce traitement électrochimique sont les suivantes : Electrolyte aqueux comprenant 1 mM ou 2 mM de ferrocyanure de sodium et 0,1 M KCl ; Pulses alternés en tension suivant l'enchaînement 1 pulse cathodique - 1 pulse anodique : durée d'une pulse cathodique/anodique : 0,1 seconde ; amplitude des pulses : + 0,8 V pour une pulse anodique ; -0,8 V pour une pulse cathodique ; Durée d'activation : 10, 20 et 30 minutes.

### Evaluation des performances électrochimiques

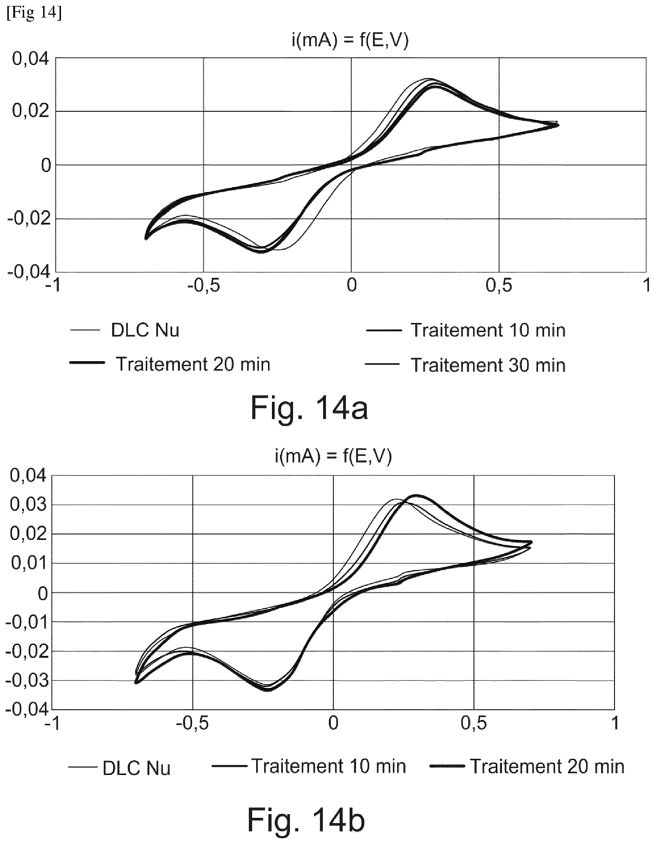

La figure 14 présente les voltamogrammes réalisés pour l'électrode DLC avant traitement électrochimique, après 10 minutes, 20 minutes et 30 minutes du traitement électrochimique dans l'électrolyte comprenant 1 mM (a) et 2 mM (b) de ferrocyanure de sodium.

Il peut être observé que le traitement de l'électrode DLC dans les électrolytes comprenant du ferrocyanure de sodium n'a aucun effet sur les caractéristiques électrochimiques de l'électrode, comparativement à un traitement opéré suivant le procédé de l'invention dans un électrolyte comprenant l'espèce oxydante ferricyanure (exemple 1).

### Exemple 14

### Première étape d'excitation dans un électrolyte comprenant du ferrocyanure de

### potassium (hors invention)

Une électrode DLC a été soumise à la première étape du traitement d'activation décrit dans l'exemple 1.1. précédent, excepté le fait que l'excitation a été opérée dans un électrolyte comprenant 1 mM de ferrocyanure de potassium dans 0,1 M KCl.
Les conditions de ce traitement électrochimique sont les suivantes : Electrolyte aqueux comprenant 1 mM de ferrocyanure de potassium et 0,1 M KCl ; Pulses alternés en tension suivant l'enchaînement 1 pulse cathodique - 1 pulse anodique : durée d'une pulse cathodique/anodique : 0,1 seconde ; amplitude des pulses : + 0,8 V pour une pulse anodique ; -0,8 V pour une pulse cathodique ;
Durée d'activation : 10, 20 et 30 minutes.

### Evaluation des performances électrochimiques

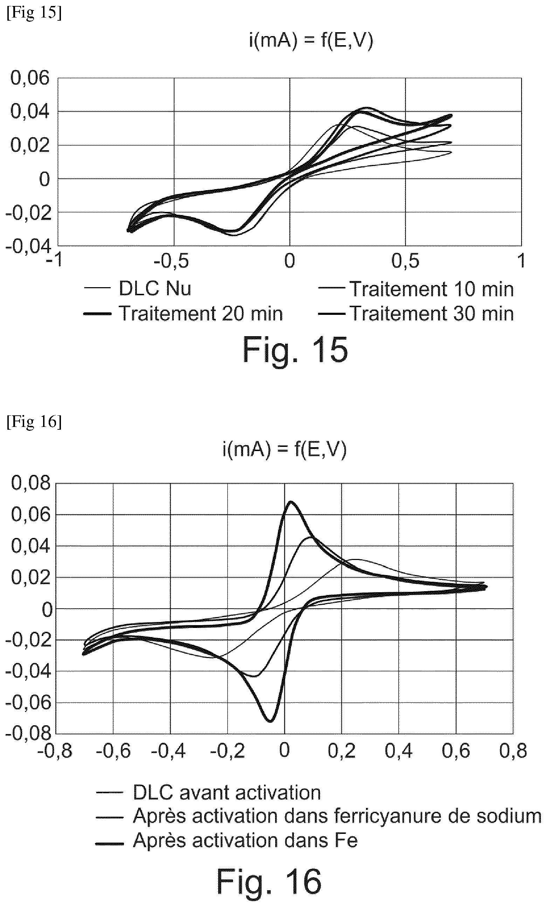

La figure 15 présente les voltamogrammes réalisés pour l'électrode DLC avant traitement électrochimique, après 10 minutes, 20 minutes et 30 minutes du traitement électrochimique dans l'électrolyte comprenant 1 mM de ferrocyanure de potassium.

Il peut être observé une légère évolution des courbes de voltammétrie, mais aucun impact positif du traitement de l'électrode DLC dans l'électrolyte comprenant du ferrocyanure de potassium sur la réactivité électrochimique de surface de l'électrode.

### Exemple 15

### Activation électrochimique de l'électrode selon un procédé conforme à l'invention avec une première étape d'excitation dans un électrolyte comprenant du ferricyanure de potassium

Une électrode DLC a été soumise aux deux étapes du traitement d'activation décrit dans l'exemple 1.1. précédent, excepté le fait que la première étape d'excitation a été opérée dans un électrolyte comprenant 1 mM de ferricyanure de potassium dans 0,1 M KCl.

Les conditions du traitement d'activation électrochimique sont les suivantes :
1^{ère} étape : traitement électrochimique dans un électrolyte aqueux comprenant 1 mM de ferricyanure de potassium et 100 mM de KCl ;
Pulses alternées en tension suivant l'enchaînement 1 pulse cathodique - 1 pulse anodique : durée d'une pulse cathodique/anodique : 0,1 seconde ; amplitude des pulses : + 0,8 V pour une pulse anodique ; -0,8 V pour une pulse cathodique.

Durée totale d'excitation : 80 minutes

### 2^{ème} étape : traitement électrochimique dans un électrolyte aqueux comprenant 0,5 M d'acide sulfurique

Pulses alternées en tension suivant l'enchaînement 1 pulse cathodique - 1 pulse anodique : durée d'une pulse cathodique/anodique : 0,1 seconde ; amplitude des pulses : + 1,3 V pour une pulse anodique ; -1,3 V pour une pulse cathodique.

Durée totale d'excitation : 30 minutes.

### Evaluation des performances électrochimiques

La figure 16 présente les voltamogrammes réalisés pour l'électrode DLC avant la première étape du traitement d'activation, après la première étape du traitement électrochimique et à l'issue de la deuxième étape du traitement électrochimique.

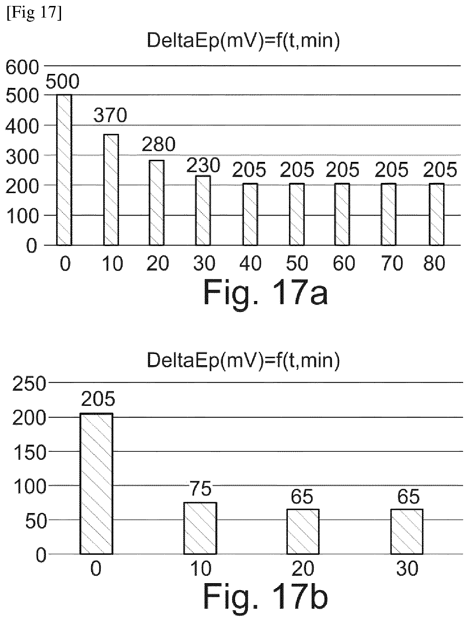

Les résultats de la figure 17 montrent qu'une réactivité optimale est atteinte pour une première étape de traitement d'activation opérée dans les conditions précitées d'une durée de 40 minutes, suivie d'une deuxième étape de traitement d'activation opérée dans les conditions précitées de 20 minutes.

Les résultats montrent que la réactivité électrochimique (ΔEₚ) pouvant être atteinte dans les conditions de la première étape du traitement électrochimique décrites précédemment, dans un électrolyte comprenant du ferricyanure de potassium, est légèrement plus faible que celle pouvant être atteinte dans les conditions de l'exemple 1, dans un électrolyte comprenant un mélange de ferricyanure/ferrocyanure de potassium : ΔEₚ final de 205 mV *versus* 133 mV pour l'exemple 1.

Néanmoins, les performances obtenues à l'issue de la deuxième étape du traitement électrochimique sont similaires à celles obtenues dans les conditions de l'exemple 1 : ΔEₚ final de 65 mV.

### Exemple 16

### Traitement électrochimique suivant la deuxième étape d'excitation sans première étape d'excitation (hors invention)

Une électrode DLC a été soumise à la deuxième étape du traitement d'activation décrit dans l'exemple 1.1. précédent, sans opérer au préalable la première étape du traitement d'activation.

Les conditions de cette étape de traitement électrochimique sont les suivantes :
Electrolyte aqueux comprenant 0,5 M d'acide sulfurique Pulses alternés en tension suivant l'enchaînement 1 pulse cathodique - 1 pulse anodique : durée d'une pulse cathodique/anodique : 0,1 seconde ; amplitude des pulses : + 1,3 V pour une pulse anodique ; -1,3 V pour une pulse cathodique.

Durée totale d'excitation : 10, 20 et 30 minutes.

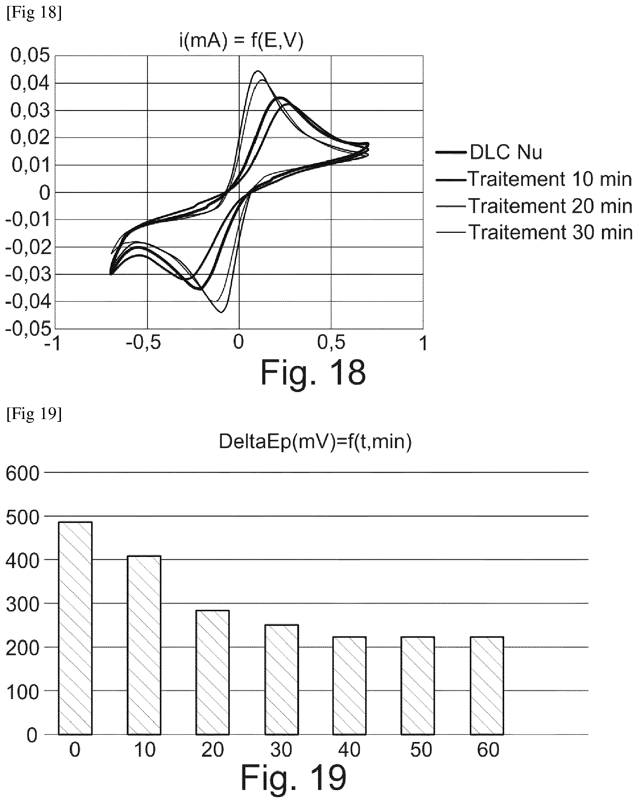

La figure 18 présente les voltamogrammes réalisés pour l'électrode DLC avant traitement électrochimique, après 10 minutes, 20 minutes et 30 minutes de la deuxième étape du traitement électrochimique sans première étape préalable.

Il peut être observé que le traitement de l'électrode DLC directement suivant la deuxième étape du traitement d'activation selon l'invention, sans opérer une première étape d'activation selon l'invention, conduit à une valeur de ΔEₚ variant de manière significative et non reproductible avec la durée du traitement d'excitation. Ainsi, les propriétés électrochimiques sont dégradées après 10 minutes de traitement, puis améliorées après 20 minutes avant de diminuer de nouveau après 30 minutes.

### Exemple 17

### Activation électrochimique de l'électrode selon un procédé conforme à l'invention avec une première étape d'excitation dans un électrolyte comprenant du chlorure de fer (invention)

Une électrode DLC a été soumise aux deux étapes du traitement d'activation décrit dans l'exemple 1.1. précédent, excepté le fait que la première étape d'excitation a été opérée dans un électrolyte comprenant 1 mM de FeCl₃ dans 0,1 M KCl.

Les conditions du traitement d'activation électrochimique sont les suivantes :
1^{ère} étape : traitement électrochimique dans un électrolyte aqueux comprenant 1 mM de FeCl₃ et 0,1 M KCl

Pulses alternés en tension suivant l'enchaînement 1 pulse cathodique - 1 pulse anodique : durée d'un pulse cathodique/anodique : 0,1 seconde ; amplitude des pulses : + 0,8 V pour un pulse anodique ; -0,8 V pour un pulse cathodique. Durée totale d'excitation : 10, 20, 30, 40, 50 et 60 minutes.

### 2^{ème} étape : traitement électrochimique dans un électrolyte aqueux comprenant 0,5 M d'acide sulfurique

Pulses alternées en tension suivant l'enchaînement 1 pulse cathodique - 1 pulse anodique : durée d'une pulse cathodique/anodique : 0,1 seconde ; amplitude des pulses : + 1,3 V pour une pulse anodique ; -1,3 V pour une pulse cathodique.

Durée totale d'excitation : 30 minutes.

### Evaluation des performances électrochimiques

La figure 19 représente les résultats de la réactivité électrochimique de l'électrode (ΔEₚ) à l'issue de la première étape du traitement d'activation pour différentes durées d'excitation électrique.

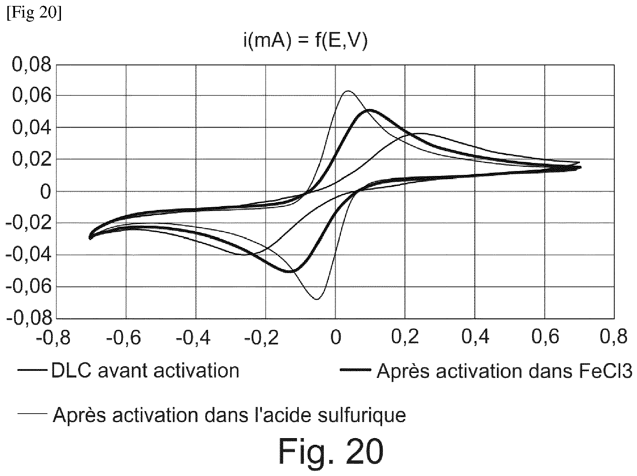

La figure 20 présente les voltamogrammes réalisés pour l'électrode DLC avant traitement électrochimique, après la première étape d'activation et après la seconde étape d'activation.

Les valeurs électrochimiques obtenues avant activation et après chacune des deux étapes du traitement d'activation selon l'invention sont rassemblées dans le tableau suivant.

**[Tableau 4]**

| Etape | Eₐ (mV) | E_{c} (mV) | iₐ (µA) | i_{c} (µA) | ΔEₚ (mV) |
|---|---|---|---|---|---|
| Avant activation | 230 | -257 | 37 | -39 | 487 |
| Après la 1^{ère} étape d'activation dans FeCl₃ | 90 | -135 | 50 | -49 | 225 |
| Après la 2^{éme} étape d'activation dans H₂SO₄ | 31 | -45 | 63 | -66 | 76 |

Les performances obtenues sont similaires à celles obtenues dans les conditions de l'exemple 1.

### Exemple 18

### Activation électrochimique de l'électrode selon un procédé conforme à l'invention avec une première étape d'excitation dans un électrolyte comprenant du periodate de sodium (invention)

Une électrode DLC a été soumise aux deux étapes du traitement d'activation décrit dans l'exemple 1.1. précédent, excepté le fait que la première étape d'excitation a été opérée dans un électrolyte comprenant 1 mM de periodate de sodium (NaIO₄) dans 0,1 M KCl.

Les conditions du traitement d'activation électrochimique sont les suivantes :
1^{ère} étape : traitement électrochimique dans un électrolyte aqueux comprenant 1 mM de NaIO₄ et 0,1 M KCl

Pulses alternés en tension suivant l'enchaînement 1 pulse cathodique - 1 pulse anodique : durée d'un pulse cathodique/anodique : 0,1 seconde ; amplitude des pulses : + 0,8 V pour un pulse anodique ; -0,8 V pour un pulse cathodique.

Durée totale d'excitation : 10, 20, 30, 40, 50 et 60 minutes.

### 2^{ème} étape : traitement électrochimique dans un électrolyte aqueux comprenant 0,5 M d'acide sulfurique

Pulses alternées en tension suivant l'enchaînement 1 pulse cathodique - 1 pulse anodique : durée d'une pulse cathodique/anodique : 0,1 seconde ; amplitude des pulses : + 1,3 V pour une pulse anodique ; -1,3 V pour une pulse cathodique. Durée totale d'excitation : 30 minutes.

### Evaluation des performances électrochimiques

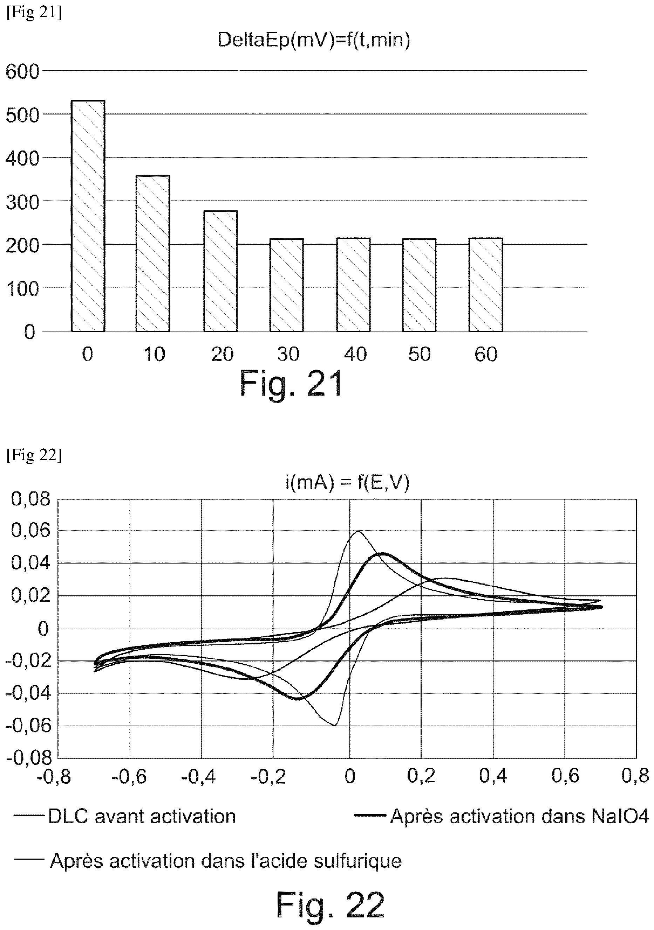

La figure 21 représente les résultats de la réactivité électrochimique de l'électrode (ΔEₚ) à l'issue de la première étape du traitement d'activation pour différentes durées d'excitation électrique.

La figure 22 présente les voltamogrammes réalisés pour l'électrode DLC avant traitement électrochimique, après la première étape d'activation et après la seconde étape d'activation.

Les valeurs électrochimiques obtenues avant activation et après chacune des deux étapes du traitement d'activation selon l'invention sont rassemblées dans le tableau suivant.

**[Tableau 5]**

| Etape | Eₐ (mV) | E_{c} (mV) | iₐ (µA) | i_{c} (µA) | ΔEₚ (mV) |
|---|---|---|---|---|---|
| Avant activation | 260 | -277 | 30 | -31 | 537 |
| Après la 1^{ère} étape d'activation dans NaIO₄ | 90 | -125 | 45 | -44 | 215 |
| Après la 2^{éme} étape d'activation dans H₂SO₄ | 20 | -45 | 59 | -60 | 65 |

Les performances obtenues sont similaires à celles obtenues dans les conditions de l'exemple 1.

### Exemple 19

### Activation électrochimique de l'électrode selon un procédé conforme à l'invention avec une première étape d'excitation dans un électrolyte comprenant du permanganate de potassium (invention)

Une électrode DLC a été soumise aux deux étapes du traitement d'activation décrit dans l'exemple 1.1. précédent, excepté le fait que la première étape d'excitation a été opérée dans un électrolyte comprenant 1 mM de permanganate de potassium (KMnO₄) dans 0,1 M KCl.

Les conditions du traitement d'activation électrochimique sont les suivantes : 1^{ère} étape : traitement électrochimique dans un électrolyte aqueux comprenant 1 mM de KMnO₄ et 0,1 M KCl

Pulses alternés en tension suivant l'enchaînement 1 pulse cathodique - 1 pulse anodique : durée d'un pulse cathodique/anodique : 0,1 seconde ; amplitude des pulses : + 0,8 V pour un pulse anodique ; -0,8 V pour un pulse cathodique.

Durée totale d'excitation : 10, 20, 30, 40, 50 et 60 minutes.

### 2^{ème} étape : traitement électrochimique dans un électrolyte aqueux comprenant 0,5 M d'acide sulfurique

Pulses alternées en tension suivant l'enchaînement 1 pulse cathodique - 1 pulse anodique : durée d'une pulse cathodique/anodique : 0,1 seconde ; amplitude des pulses : + 1,3 V pour une pulse anodique ; -1,3 V pour une pulse cathodique.

Durée totale d'excitation : 30 minutes.

### Evaluation des performances électrochimiques

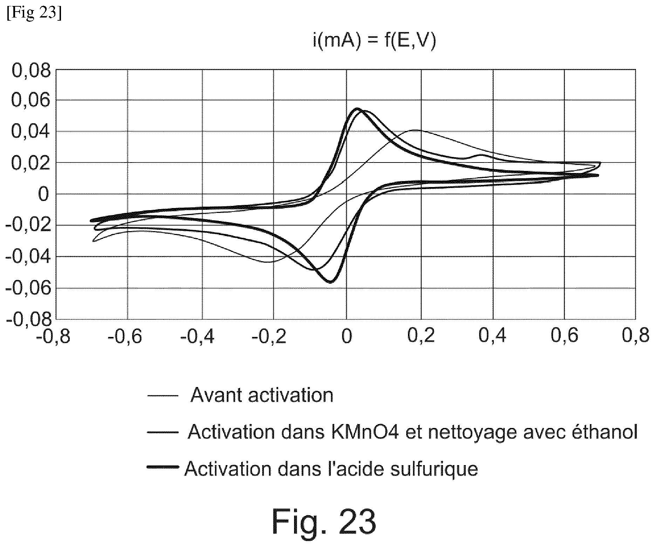

La figure 23 présente les voltamogrammes réalisés pour l'électrode DLC avant traitement électrochimique, après la première étape d'activation et après la seconde étape d'activation.

Les valeurs électrochimiques obtenues avant activation et après chacune des deux étapes du traitement d'activation selon l'invention sont rassemblées dans le tableau suivant.

**[Tableau 6]**

| Etape | Eₐ (mV) | E_{c} (mV) | iₐ (µA) | i_{c} (µA) | ΔEₚ (mV) |
|---|---|---|---|---|---|
| Avant activation | 190 | -210 | 41 | -44 | 400 |
| Après la 1^{ère} étape d'activation dans KMnO₄ | 40 | -74 | 53 | -48 | 114 |
| Après la 2^{eme} étape d'activation dans H₂SO₄ | 20 | -45 | 54 | -56 | 65 |

Les performances obtenues sont similaires à celles obtenues dans les conditions de l'exemple 1.

### Références

[1] J. Robertson et al., Materials Science and Engineering R(27), 2002, 129-281;
[2] Duran et al., Analyst, 2014, 139, 3160-3166 ;
[3] Salazar-Banda et al., Electrochemica Acta 51 (2006) 4612-4619.

## Revendications

1. Procédé d'activation de la surface d'une électrode à base de carbone amorphe DLC par un traitement électrochimique comportant au moins les étapes (i) et (ii) suivantes, réalisées dans cet ordre :
(i) application à ladite électrode d'une excitation électrique sous la forme d'une alternance d'impulsions électriques cathodiques et anodiques, en courant ou en tension, au contact d'un électrolyte aqueux comprenant au moins une espèce oxydante d'un couple oxydo-réducteur présentant un potentiel standard, à température ambiante et pression atmosphérique, noté E⁰, strictement supérieur à 0, et au moins un sel de fond ; et
(ii) application à ladite électrode, ayant été préalablement soumise à l'étape (i), d'une excitation électrique sous la forme d'une alternance d'impulsions électriques cathodiques et anodiques, en tension, au contact d'un électrolyte aqueux dépourvu d'espèce électro-active.

2. Procédé selon la revendication 1, dans lequel ladite électrode à base de carbone amorphe DLC est formée d'une couche de DLC supportée par un substrat, en particulier en matériau(x) métallique(s), métalloïde(s) ou polymérique(s), notamment en silicium, ladite couche de DLC présentant plus particulièrement une épaisseur comprise entre 10 nm et 10 µm, en particulier entre 20 nm et 500 nm et plus particulièrement entre 25 nm et 250 nm.

3. Procédé selon la revendication précédente, dans lequel ladite électrode à base de carbone amorphe DLC est préalablement préparée par dépôt, en surface dudit substrat, de DLC par pulvérisation cathodique magnétron.

4. Procédé selon l'une quelconque des revendications précédentes, dans lequel les impulsions électriques de l'étape (i) et/ou de l'étape (ii) d'excitation d'électrique présentent une durée comprise entre 5 ms et 500 ms, en particulier entre 10 ms et 250 ms et plus particulièrement entre 20 ms et 250 ms, de préférence de 100 ms.

5. Procédé selon l'une quelconque des revendications précédentes, dans lequel l'excitation électrique suivant l'étape (i) et/ou l'étape (ii) est opérée sous la forme d'impulsions périodiques, en particulier sous la forme d'une alternance d'une unique impulsion cathodique et d'une unique impulsion anodique.

6. Procédé selon l'une quelconque des revendications précédentes, dans lequel ladite espèce oxydante de l'électrolyte de l'étape (i) appartient à un couple rédox présentant un potentiel standard, à température ambiante et pression atmosphérique, E⁰, supérieur ou égal à 0,05 V, notamment supérieur ou égal à 0,08 V, en particulier supérieur ou égal à 0,1 V et plus particulièrement supérieur ou égal à 0,2 V.

7. Procédé selon l'une quelconque des revendications précédentes, dans lequel ladite espèce oxydante de l'électrolyte de l'étape (i) est métallique ou non ; sous forme complexée, sous forme ionique ou sous forme d'oxoanion, en particulier ladite espèce oxydante est choisie parmi :
- le ferricyanure (Fe(CN)₆³⁻), appartenant au couple rédox Fe(CN)₆³⁻/Fe(CN)₆⁴⁻; en particulier introduit au niveau dudit électrolyte sous la forme d'un sel de ferricyanure, notamment un ferricyanure de métal alcalin ou alcalino-terreux, par exemple le ferricyanure de potassium ;
- l'ion fer (III), appartenant au couple rédox Fe³⁺/Fe²⁺ ; en particulier introduit au niveau dudit électrolyte sous la forme de chlorure de fer (III) ;
- le periodate (IO₄⁻), appartenant au couple rédox IO₄⁻/IO₃⁻, en particulier introduit au niveau dudit électrolyte sous la forme d'un sel de métal alcalin ou alcalino-terreux tel que le periodate de sodium ;
- le permanganate (MnO₄⁻), appartenant au couple rédox (MnO₄⁻/MnO₄²⁻), en particulier introduit au niveau dudit électrolyte sous la forme d'un sel de métal alcalin ou alcalino-terreux tel que le permanganate de potassium ;
et leurs mélanges.

8. Procédé selon l'une quelconque des revendications précédentes, dans lequel ladite ou lesdites espèce(s) oxydante(s) dudit électrolyte de l'étape (i) est(sont) présente(s) en une teneur comprise entre 0,01 et 100 mmol.L⁻¹, en particulier entre 0,1 et 20 mmol.L⁻¹ et plus particulièrement entre1 et 10 mmol.L⁻¹.

9. Procédé selon l'une quelconque des revendications précédentes, dans lequel l'étape (i) est réalisée par impulsions électriques en tension, lesdites impulsions cathodiques et anodiques en tension présentant en particulier une amplitude, en valeur absolue, comprise entre 0,5 et 1,5 V, en particulier entre 0,6 et 1,5 V et plus particulièrement entre 0,8 et 1,3 V.

10. Procédé selon l'une quelconque des revendications 1 à 8, dans lequel l'étape (i) est réalisée par impulsions électriques en courant, lesdites impulsions cathodiques et anodiques en courant présentant en particulier une amplitude, en valeur absolue, comprise entre 0,1 et 100 µA.cm⁻², en particulier entre 0,2 et 50 µA.cm⁻² et plus particulièrement entre 0,5 et 25 µA.cm⁻².

11. Procédé selon l'une quelconque des revendications précédentes, dans lequel l'étape (ii) est réalisée dans un électrolyte aqueux comprenant un ou plusieurs composés oxydants choisis parmi les perchlorates, tels que NaClO₄, KClO₄, LiClO₄ ; les sulfates, tels que Na₂SO₄, K₂SO₄, Li₂SO₄ ; les acides tels que HClO₄, H₃PO₄, H₂SO₄, et leurs mélanges, de préférence dans l'acide sulfurique dilué dans l'eau ;
la concentration en le ou lesdits composé(s) oxydant(s), en particulier en acide sulfurique, dans ledit électrolyte, étant en particulier comprise entre 0,05 et 1 mol.L⁻¹, en particulier entre 0,1 et 1 mol.L⁻¹

12. Procédé selon l'une quelconque des revendications précédentes, dans lequel l'étape (ii) est réalisée par alternance d'impulsions électriques cathodiques et anodiques en tension, d'amplitude, en valeur absolue, comprise entre 0,8 et 1,9 V, en particulier entre 1,0 et 1,8 V et plus particulièrement entre 1,2 et 1,5 V.

13. Electrode à base de carbone amorphe DLC, l'électrode étant **caractérisée en ce que** sa surface est activée électro-chimiquement par un procédé tel que défini selon l'une quelconque des revendications 1 à 12.

14. Utilisation d'une électrode à base de carbone amorphe DLC telle que définie en revendication 13, dans un capteur électrochimique, en particulier destiné à l'analyse physico-chimique d'un liquide, par exemple pour le suivi de la qualité de l'eau ; ou dans un détecteur en biotechnologie, par exemple pour le suivi d'un procédé de bio-production.

15. Capteur électrochimique, comprenant une électrode à base de carbone amorphe DLC telle que définie en revendication 13, ledit capteur étant en particulier destiné à l'analyse physico-chimique d'un liquide, par exemple pour le suivi de la qualité de l'eau.

## Patentansprüche

1. Verfahren zur Aktivierung der Oberfläche einer Elektrode auf Basis von amorphem Kohlenstoff DLC durch eine elektrochemische Behandlung, die mindestens die folgenden Schritte (i) und (ii) aufweist, durchgeführt in dieser Reihenfolge:
(i) Anwenden, an die Elektrode, einer elektrischen Anregung in Form einer Wechselfolge von kathodischen und anodischen elektrischen Strom- oder Spannungsimpulsen, in Kontakt mit einem wässrigen Elektrolyten, der mindestens eine oxidierende Spezies eines Redox-Paars, das ein Standardpotential bei Umgebungstemperatur und Atmosphärendruck, bezeichnet mit E⁰, strikt höher als 0 aufweist, und mindestens ein Grundsalz enthält; und
(ii) Anwenden an die Elektrode, die vorher dem Schritt (i) unterzogen wurde, einer elektrischen Anregung in Form einer Wechselfolge von kathodischen und anodischen elektrischen Spannungsimpulsen in Kontakt mit einem wässrigen Elektrolyten ohne elektroaktive Spezies.

2. Verfahren nach Anspruch 1, wobei die Elektrode auf Basis von amorphem Kohlenstoff DLC von einer Schicht DLC getragen von einem Substrat gebildet wird, insbesondere aus Metall-, Halbmetall- oder Polymerwerkstoff(en), vor allem aus Silicium, wobei die Schicht von DLC genauer eine Dicke zwischen 10 nm und 10 pm, insbesondere zwischen 20 nm und 500 nm und genauer zwischen 25 nm und 250 nm aufweist.

3. Verfahren nach dem vorhergehenden Anspruch, wobei die Elektrode auf Basis von amorphem Kohlenstoff DLC vorher durch Abscheiden von DLC auf die Oberfläche des Substrats durch Magnetron-Sputtern hergestellt wird.

4. Verfahren nach einem der vorhergehenden Ansprüche, wobei die elektrischen Impulse des Schritts (i) und/oder des Schritts (ii) der elektrischen Anregung eine Dauer zwischen 5 ms und 500 ms, insbesondere zwischen 10 ms und 250 ms und genauer zwischen 20 ms und 250 ms, vorzugsweise von 100 ms aufweisen.

5. Verfahren nach einem der vorhergehenden Ansprüche, wobei die elektrische Anregung gemäß dem Schritt (i) und/oder dem Schritt (ii) in Form von periodischen Impulsen bewirkt wird, insbesondere in Form einer Wechselfolge eines einzigen Kathodenimpulses und eines einzigen Anodenimpulses.

6. Verfahren nach einem der vorhergehenden Ansprüche, wobei die oxidierende Spezies des Elektrolyten des Schritts (i) zu einem Redox-Paar gehört, das ein Standardpotential bei Umgebungstemperatur und Atmosphärendruck E⁰ höher als oder gleich 0,05 V, vor allem höher als oder gleich 0,08 V, insbesondere höher als oder gleich 0,1 V und genauer höher als oder gleich 0,2 V aufweist.

7. Verfahren nach einem der vorhergehenden Ansprüche, wobei die oxidierende Spezies des Elektrolyten des Schritts (i) metallisch oder nicht, in komplexierter Form, in ionischer Form oder in Form eines Oxoanions ist, insbesondere wird die oxidierende Spezies ausgewählt aus:
- dem Ferricyanid (Fe(CN)₆³⁻), das zum Redox-Paar Fe(CN)₆³⁻/Fe(CN)₆⁴⁻ gehört; insbesondere eingeführt im Bereich des Elektrolyten in Form eines Ferricyanidsalzes, insbesondere ein Alkalimetall- oder Erdalkalimetall-Ferricyanid, zum Beispiel das Kaliumferricyanid;
- dem Eisen (III) -Ion, das zum Redox-Paar Fe³⁺/Fe²⁺ gehört; insbesondere eingeführt im Bereich des Elektrolyten in Form von Eisen(III)-Chlorid;
- dem Periodat (IO₄⁻), das zum Redox-Paar IO₄⁻/IO₃⁻gehört, insbesondere eingeführt im Bereich des Elektrolyten in Form eines Alkali- oder Erdalkalimetallsalzes wie das Natriumperiodat;
- dem Permanganat (MnO₄⁻), das zum Redox-Paar (MnO₄⁻/MnO₄²⁻) gehört, insbesondere eingeführt im Bereich des Elektrolyten in Form eines Alkali- oder Erdakalimetallsalzes wie das Kaliumpermanganat;
und ihren Mischungen.

8. Verfahren nach einem der vorhergehenden Ansprüche, wobei die oxidierende oder die oxidierenden Spezies des Elektrolyten des Schritts (i) in einem Gehalt vorhanden ist (sind), der zwischen 0,01 und 100 mmol.L⁻¹, insbesondere zwischen 0,1 und 20 mmol.L⁻¹, und genauer zwischen 1 und 10 mmol.L⁻¹ liegt.

9. Verfahren nach einem der vorhergehenden Ansprüche, wobei der Schritt (i) durch elektrische Spannungsimpulse durchgeführt wird, wobei die kathodischen und anodischen Spannungsimpulse insbesondere eine Amplitude, im Absolutwert, zwischen 0,5 und 1,5 V, insbesondere zwischen 0,6 und 1,5 V und genauer zwischen 0,8 und 1,3 V aufweisen.

10. Verfahren nach einem der Ansprüche 1 bis 8, wobei der Schritt (i) durch elektrische Stromimpulse durchgeführt wird, wobei die kathodischen und anodischen Stromimpulse insbesondere eine Amplitude, im Absolutwert, zwischen 0,1 und 100µA.cm⁻², insbesondere zwischen 0,2 und 50µA.cm⁻² und genauer zwischen 0,5 und 25µA.cm⁻² aufweisen.

11. Verfahren nach einem der vorhergehenden Ansprüche, wobei der Schritt (ii) in einem wässrigen Elektrolyten durchgeführt wird, der eine oder mehrere oxidierende Verbindungen enthält, die ausgewählt werden aus den Perchloraten, wie NaClO₄, KClO₄, LiClO₄; den Sulfaten, wie Na₂SO₄, K₂SO₄, Li₂SO₄; den Säuren wie HClO₄, H₃PO₄, H₂SO₄, und ihren Mischungen, vorzugsweise in der in Wasser gelösten Schwefelsäure;
wobei die Konzentration von oxidierender Verbindung oder Verbindungen, insbesondere von Schwefelsäure, im Elektrolyten insbesondere zwischen 0,05 und 1 mol.L⁻¹, insbesondere zwischen 0,1 und 1 mol.L⁻¹ liegt.

12. Verfahren nach einem der vorhergehenden Ansprüche, wobei der Schritt (ii) durch eine Wechselfolge von kathodischen und anodischen elektrischen Spannungsimpulsen durchgeführt wird, mit einer Amplitude, im Absolutwert, zwischen 0,8 und 1,9 V, insbesondere zwischen 1,0 und 1,8 V und genauer zwischen 1,2 und 1,5 V.

13. Elektrode auf Basis von amorphem Kohlenstoff DLC, wobei die Elektrode **dadurch gekennzeichnet ist, dass** ihre Oberfläche durch ein Verfahren wie gemäß einem der Ansprüche 1 bis 12 definiert elektrochemisch aktiviert wird.

14. Verwendung einer Elektrode auf Basis von amorphem Kohlenstoff DLC wie in Anspruch 13 definiert in einem elektrochemischen Sensor, der insbesondere für die physikalisch-chemische Analyse einer Flüssigkeit, zum Beispiel für die Überwachung der Wasserqualität; oder in einem Detektor in der Biotechnologie, zum Beispiel für die Überwachung eines Bioproduktionsverfahrens bestimmt ist.

15. Elektrochemischer Sensor, der eine Elektrode auf Basis von amorphem Kohlenstoff DLC wie in Anspruch 13 definiert enthält, wobei der Sensor insbesondere für die physikalisch-chemische Analyse einer Flüssigkeit bestimmt ist, zum Beispiel für die Überwachung der Wasserqualität.

## Claims

1. Process for activating the surface of an electrode based on DLC amorphous carbon by an electrochemical treatment comprising at least the following steps (i) and (ii), carried out in this order:
(i) applying, to said electrode, an electrical excitation in the form of an alternation of cathodic and anodic electrical pulses, these being current or voltage pulses, in contact with an aqueous electrolyte comprising at least one oxidizing species of a redox pair having a standard potential, at ambient temperature and atmospheric pressure, denoted E⁰, strictly greater than 0, and at least one base salt; and
(ii) applying, to said electrode that was previously subjected to step (i), an electrical excitation in the form of an alternation of cathodic and anodic electrical pulses, these being voltage pulses, in contact with an aqueous electrolyte devoid of electroactive species.

2. Process according to Claim 1, wherein said electrode based on DLC amorphous carbon is formed of a DLC layer supported by a substrate, in particular made of metal, metalloid or polymeric material(s), in particular made of silicon, said DLC layer having more particularly a thickness of between 10 nm and 10 pm, in particular between 20 nm and 500 nm and more particularly between 25 nm and 250 nm.

3. Process according to the preceding claim, wherein said electrode based on DLC amorphous carbon is prepared beforehand by deposition, on the surface of said substrate, of DLC by magnetron cathode sputtering.

4. Process according to any one of the preceding claims, wherein the electrical pulses of step (i) and/or of step (ii) of electrical excitation have a duration of between 5 ms and 500 ms, in particular between 10 ms and 250 ms and more particularly between 20 ms and 250 ms, and preferably of 100 ms.

5. Process according to any one of the preceding claims, wherein the electrical excitation in accordance with step (i) and/or step (ii) is carried out in the form of periodic pulses, in particular in the form of an alternation of a single cathodic pulse and a single anodic pulse.

6. Process according to any one of the preceding claims, wherein said oxidizing species of the electrolyte of step (i) belongs to a redox pair having a standard potential, at ambient temperature and atmospheric pressure, E⁰, of greater than or equal to 0.05 V, especially greater than or equal to 0.08 V, in particular greater than or equal to 0.1 V and more particularly greater than or equal to 0.2 V.

7. Process according to any one of the preceding claims, wherein said oxidizing species of the electrolyte of step (i) is metallic or non-metallic; in complexed form, in ionic form or in the form of an oxo anion, in particular said oxidizing species is chosen from:
- ferricyanide (Fe(CN)₆³⁻), belonging to the redox pair Fe(CN)₆³⁻/Fe(CN)₆⁴⁻; in particular introduced in said electrolyte in the form of a ferricyanide salt, especially an alkali metal or alkaline earth metal ferricyanide, for example potassium ferricyanide;
- the iron (III) ion, belonging to the redox pair Fe³⁺/Fe²⁺; in particular introduced in said electrolyte in the form of iron(III) chloride;
- periodate (IO₄⁻), belonging to the redox pair IO₄⁻/IO₃⁻, in particular introduced in said electrolyte in the form of an alkali metal or alkaline earth metal salt, such as sodium periodate;
- permanganate (MnO₄⁻), belonging to the redox pair (MnO₄⁻/MnO₄²⁻), in particular introduced in said electrolyte in the form of an alkali metal or alkaline earth metal salt, such as potassium permanganate;
and mixtures thereof.

8. Process according to any one of the preceding claims, wherein said oxidizing species of said electrolyte of step (i) is/are present in a content of between 0.01 and 100 mmol.L⁻¹, in particular between 0.1 and 20 mmol.L⁻¹ and more particularly between 1 and 10 mmol.L⁻¹.

9. Process according to any one of the preceding claims, wherein step (i) is carried out by electrical voltage pulses, said cathodic and anodic voltage pulses in particular having an amplitude, in absolute value, of between 0.5 and 1.5 V, in particular between 0.6 and 1.5 V and more particularly between 0.8 and 1.3 V.

10. Process according to any one of Claims 1 to 8, wherein step (i) is carried out by electrical current pulses, said cathodic and anodic current pulses in particular having an amplitude, in absolute value, of between 0.1 and 100 pA.cm⁻², in particular between 0.2 and 50 µA.cm⁻² and more particularly between 0.5 and 25 µA.cm⁻².

11. Process according to any one of the preceding claims, wherein step (ii) is carried out in an aqueous electrolyte comprising one or more oxidizing compounds chosen from perchlorates, such as NaClO₄, KClO₄, LiClO₄; sulfates, such as Na₂SO₄, K₂SO₄, Li₂SO₄; acids such as HClO₄, H₃PO₄, H₂SO₄, and mixtures thereof, preferably in sulfuric acid diluted in water;
the concentration of said oxidizing compound(s), in particular of sulfuric acid, in said electrolyte, being in particular between 0.05 and 1 mol.L⁻¹, in particular between 0.1 and 1 mol.L⁻¹.

12. Process according to any one of the preceding claims, wherein step (ii) is carried out by alternation of cathodic and anodic electrical voltage pulses of an amplitude, in absolute value, of between 0.8 and 1.9 V, in particular between 1.0 and 1.8 V and more particularly between 1.2 and 1.5 V.

13. Electrode based on DLC amorphous carbon, the electrode being **characterized in that** its surface is electrochemically activated by a process as defined according to any one of Claims 1 to 12.

14. Use of an electrode based on DLC amorphous carbon as defined in Claim 13, in an electrochemical sensor, in particular intended for the physicochemical analysis of a liquid, for example for monitoring the quality of water; or in a biotechnological detector, for example for monitoring a bio-production process.

15. Electrochemical sensor, comprising an electrode based on DLC amorphous carbon as defined in Claim 13, said sensor being in particular intended for the physicochemical analysis of a liquid, for example for monitoring the quality of water.
